# EUROPEAN PATENT APPLICATION

(11) **EP 3 276 479 A1**
(43) Date of publication of application: **31.01.2018**
(21) Application number: 15886552.7
(22) Date of filing: 14.05.2015
(51) Int. Cl.: G06F 3/0488, G06F 3/048, G06F 1/16, G04G 13/02

(54) **MOBILE TERMINAL AND CONTROL METHOD THEREFOR**

(30) Priority: 23.03.2015 KR 20150040240
(71) Applicant: LG Electronics Inc., Seoul 07336 (KR)
(72) Inventor: KIM, Jongsup, Seoul 06772 (KR); KIM, Namki, Seoul 06772 (KR); SHIN, Wook, Seoul 06772 (KR); KIM, Yung, Seoul 06772 (KR)
(74) Representative: Beyer, Andreas
(86) International application number: PCT/KR2015/004849
(87) International publication number: WO 2016/153104

(57) **Abstract**

The present invention relates to a mobile terminal formed so as to wrap around the wrist and a control method therefor, the mobile terminal comprising: a main body; a band connected to the main body and formed so as to be wearable around the wrist; a touch screen arranged on the front surface of the main body, formed so as to detect a touch, and displaying an hour hand and a minute hand indicating the current time; and a control unit for moving an hour hand or a minute hand to a certain point on the touch screen and executing a preset function on the basis of the position of the moved hour hand or minute hand, when a touch applied to either the hour hand or the minute hand is moved to the certain point on the touch screen.

## Description

### TECHNICAL FIELD

The present invention relates to a mobile terminal formed to wrap around one's wrist and a method for controlling the same.

### BACKGROUND ART

Terminals may be generally classified as mobile/portable terminals or stationary terminals according to their mobility. Mobile terminals may also be classified as handheld terminals or vehicle mounted terminals according to whether or not a user can directly carry the terminal.

As it becomes multifunctional, a mobile terminal can be allowed to capture still images or moving images, play music or video files, play games, receive broadcast and the like, so as to be implemented as an integrated multimedia player. Various attempts have been made to implement complicated functions in such a multimedia device by means of hardware or software.

Owing to such an improvement, recent mobile terminals have been evolved to various types of designs, and a wristwatch type mobile terminal which can be fixed to a user's body has been developed.

In case of the wristwatch type mobile terminal, a touch screen is provided in which the hour hand and the minute hand may be displayed to indicate the time like a general watch. In such a wristwatch type mobile terminal, an hour hand and a minute hand are not only a graphic object simply indicating the time, but need to operate as a graphic object which is formed to additionally execute various functions. That is, it is necessary to develop a user interface (or a graphic interface) which is specialized to the wristwatch type mobile terminal using the hour hand and the minute hand.

### DISCLOSURE OF THE INVENTION

Therefore, an object of the present invention is to provide a mobile terminal and a method for controlling the same, capable of performing various functions based on a user input applied to the hour hand and minute hand indicating the time.

To achieve these and other advantages and in accordance with the purpose of the present invention, as embodied and broadly described herein, there is provided a mobile terminal including a body, a band connected to the body and formed to be wearable to a user's wrist, a touch screen disposed at a front of the body and formed to sense a touch, and configured to display an hour hand and a minute hand indicating the current time; and a controller configured to, when a touch applied to any one of the hour hand and the minute hand is moved to any point on the touch screen, move the any one to the any point and execute a preset function based on the moved any one position.

Further, to achieve these and other advantages and in accordance with the purpose of the present invention, as embodied and broadly described herein, there is provided a method for controlling the mobile terminal including displaying a hour hand and a minute hand which indicate the current time on a touch screen, and when a touch applied to any one of the hour hand and the minute hand is moved to any point on the touch screen, moving the any one to any point and executing a preset function based on the moved any one position.

The effect of the mobile terminal and the control method thereof according to the present invention is as follows.

According to the present invention, it is possible to perform various functions through a touch input applied to any one of the hour hand and the minute hand indicating the current time. As a result, a user can more conveniently perform other functions using screen information indicating the time.

### BRIEF DESCRIPTION OF THE DRAWINGS

FIG. 1A is a block diagram illustrating a mobile terminal related to the present invention;
FIGS. 1B and 1C are conceptual views illustrating an example of the mobile terminal according to the present invention, viewed from different directions;
FIG. 2 is a conceptual view illustrating a modified example of the mobile terminal according to the present invention;
FIG. 3 is a perspective view illustrating an example of a watch type mobile terminal according to one embodiment of the present invention;
FIG. 4 is a flowchart representatively illustrating a control method of the present invention;
FIG. 5 is a conceptual view for explaining an operation in case that the hour hand is moved in a counterclockwise direction in the mobile terminal according to the present invention;
FIG. 6 is a conceptual view for explaining an operation to set a time range and guide the set time range when the hour hand or the minute hand is moved by a touch in the mobile terminal according to the present invention;
FIGS. 7 and 8 are conceptual views for explaining an operation in case that the hour hand is moved in a clockwise direction in the mobile terminal according to the present invention;
FIGS. 9A and 9B are conceptual views for explaining an operation in case that the minute hand is moved in a clockwise direction in the mobile terminal according to the present invention;
FIG. 10A is a view for explaining a case that the state of the mobile terminal satisfies a preset condition in the mobile terminal according to the present invention;
FIGS. 10B through 10D are views for explaining an operation of the mobile terminal according to a movement of the hour hand or the minute hand when the preset condition is satisfied;
FIGS. 11A through 11C are views for explaining a method to indicate a preset notification in the mobile terminal according to the present invention;
FIG. 11D is a view for explaining a method to reset the preset notification;
FIG. 12 is a view for explaining a method to reset a notification which has already been outputted in the mobile terminal according to the present invention;
FIGS. 13A and 13B are views for explaining a method to set a new alarm in the mobile terminal according to the present invention;
FIG. 14 is a view for explaining a method to reset an alarm while the alarm is outputted in the mobile terminal according to the present invention; and
FIG. 15 is a view for explaining a method to receive an input of a password to release a lock state in the mobile terminal according to the present invention.

### MODES FOR CARRYING OUT THE PREFERRED EMBODIMENTS

Description will now be given in detail according to exemplary embodiments disclosed herein, with reference to the accompanying drawings. For the sake of brief description with reference to the drawings, the same or equivalent components may be provided with the same or similar reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be connected with the other element or intervening elements may also be present. In contrast, when an element is referred to as being "directly connected with" another element, there are no intervening elements present.

A singular representation may include a plural representation unless it represents a definitely different meaning from the context.

Terms such as "include" or "has" are used herein and should be understood that they are intended to indicate an existence of several components, functions or steps, disclosed in the specification, and it is also understood that greater or fewer components, functions, or steps may likewise be utilized.

Mobile terminals presented herein may be implemented using a variety of different types of terminals. Examples of such terminals include cellular phones, smart phones, user equipment, laptop computers, digital broadcast terminals, personal digital assistants (PDAs), portable multimedia players (PMPs), navigators, portable computers (PCs), slate PCs, tablet PCs, ultra books, wearable devices (for example, smart glasses), head mounted displays (HMDs), and the like.

By way of non-limiting example only, further description will be made with reference to particular types of mobile terminals. However, such teachings apply equally to other types of terminals, such as those types noted above. In addition, these teachings may also be applied to stationary terminals such as digital TV, desktop computers, and a digital signage.

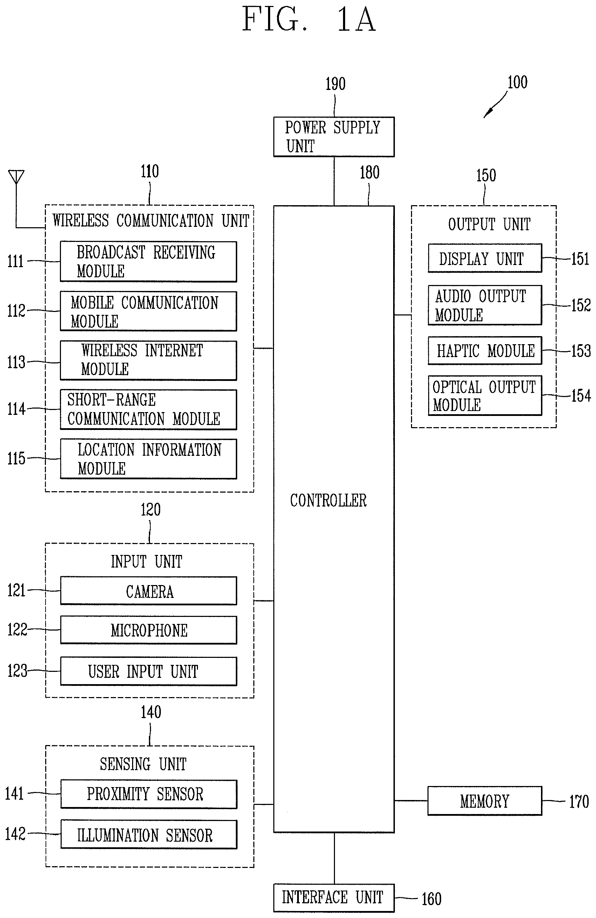

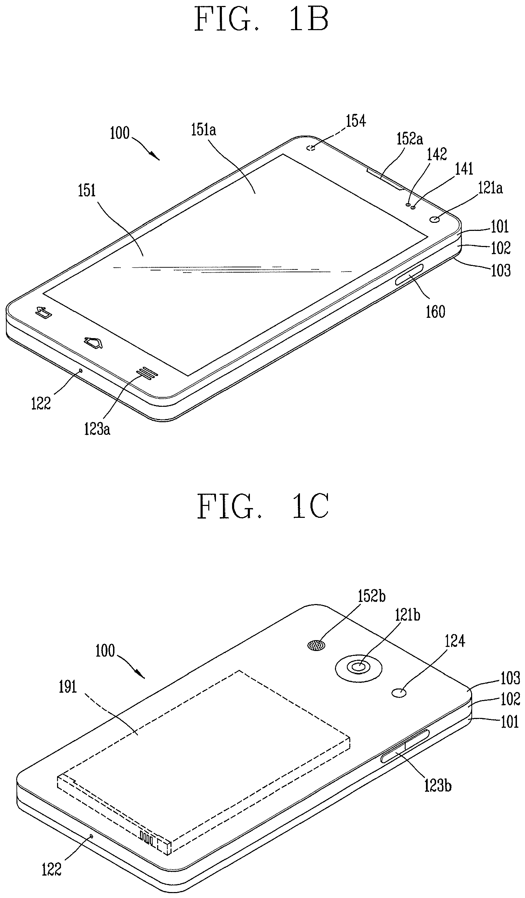

Reference is now made to FIGS. 1A-1C, where FIG. 1A is a block diagram of a mobile terminal in accordance with the present disclosure, and FIGS. 1B and 1C are conceptual views of one example of the mobile terminal, viewed from different directions.

The mobile terminal 100 is shown having components such as a wireless communication unit 110, an input unit 120, a sensing unit 140, an output unit 150, an interface unit 160, a memory 170, a controller 180, and a power supply unit 190. It is understood that implementing all of the illustrated components shown in FIG. 1A is not a requirement, and that greater or fewer components may alternatively be implemented.

The mobile terminal 100 is shown having wireless communication unit 110 configured with several commonly implemented components. For instance, the wireless communication unit 110 typically includes one or more components which permit wireless communication between the mobile terminal 100 and a wireless communication system or network within which the mobile terminal is located.

The wireless communication unit 110 typically includes one or more modules which permit communications such as wireless communications between the mobile terminal 100 and a wireless communication system, communications between the mobile terminal 100 and another mobile terminal, communications between the mobile terminal 100 and an external server. Further, the wireless communication unit 110 typically includes one or more modules which connect the mobile terminal 100 to one or more networks.

To facilitate such communications, the wireless communication unit 110 includes one or more of a broadcast receiving module 111, a mobile communication module 112, a wireless Internet module 113, a short-range communication module 114, and a location information module 115.

The input unit 120 includes a camera 121 for obtaining images or video, a microphone 122, which is one type of audio input device for inputting an audio signal, and a user input unit 123 (for example, a touch key, a push key, a mechanical key, a soft key, and the like) for allowing a user to input information. Data (for example, audio, video, image, and the like) is obtained by the input unit 120 and may be analyzed and processed by controller 180 according to device parameters, user commands, and combinations thereof.

The sensing unit 140 is typically implemented using one or more sensors configured to sense internal information of the mobile terminal, the surrounding environment of the mobile terminal, user information, and the like. For example, the sensing unit 140 is shown having a proximity sensor 141 and an illumination sensor 142. If desired, the sensing unit 140 may alternatively or additionally include other types of sensors or devices, such as a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, camera 121), a microphone 122, a battery gauge, an environment sensor (for example, a barometer, a hygrometer, a thermometer, a radiation detection sensor, a thermal sensor, and a gas sensor, among others), and a chemical sensor (for example, an electronic nose, a health care sensor, a biometric sensor, and the like), to name a few. The mobile terminal 100 may be configured to utilize information obtained from at least two sensors of the sensing unit, and combinations thereof.

The output unit 150 is typically configured to output various types of information, such as audio, video, tactile output, and the like. The output unit 150 is shown having a display unit 151, an audio output module 152, a haptic module 153, and an optical output module 154. The display unit 151 may have an inter-layered structure or an integrated structure with a touch sensor in order to facilitate a touch screen. The touch screen may provide an output interface between the mobile terminal 100 and a user, as well as function as the user input unit 123 which provides an input interface between the mobile terminal 100 and the user.

The interface unit 160 serves as an interface with various types of external devices that can be coupled to the mobile terminal 100. The interface unit 160, for example, may include any of wired or wireless ports, external power supply ports, wired or wireless data ports, memory card ports, ports for connecting a device having an identification module, audio input/output (I/O) ports, video I/O ports, earphone ports, and the like. In some cases, the mobile terminal 100 may perform assorted control functions associated with a connected external device, in response to the external device being connected to the interface unit 160.

The memory 170 is typically implemented to store data to support various functions or features of the mobile terminal 100. For instance, the memory 170 may be configured to store application programs executed in the mobile terminal 100, data or instructions for operations of the mobile terminal 100, and the like. Some of these application programs may be downloaded from an external server via wireless communication. Other application programs may be installed within the mobile terminal 100 at time of manufacturing or shipping, which is typically the case for basic functions of the mobile terminal 100 (for example, receiving a call, placing a call, receiving a message, sending a message, and the like). It is common for application programs to be stored in the memory 170, installed in the mobile terminal 100, and executed by the controller 180 to perform an operation (or function) for the mobile terminal 100.

The controller 180 typically functions to control overall operation of the mobile terminal 100, in addition to the operations associated with the application programs. The controller 180 may provide or process information or functions appropriate for a user by processing signals, data, information and the like, which are input or output by the various components, or activating application programs stored in the memory 170.

Further, the controller 180 controls some or all of the components shown in FIG. 1A in order to drive application programs stored in the memory 170. Further, in order to drive the application programs, the controller 180 may operate at least two of the components included in the mobile terminal 100 in a combined manner.

The power supply unit 190 can be configured to receive external power or provide internal power in order to supply appropriate power required for operating elements and components included in the mobile terminal 100. The power supply unit 190 may include a battery, and the battery may be configured to be embedded in the terminal body, or configured to be detachable from the terminal body.

At least some of the above components may operate in a cooperating manner, so as to implement an operation or a control method of the mobile terminal according to various embodiments to be explained later. The operation or the control method of the mobile terminal may be implemented on the mobile terminal by driving at least one application program stored in the memory 170.

Hereinafter, the above components will be explained in more detail with reference to FIG. 1A before various embodiments implemented through the aforementioned mobile terminal 100 are explained.

Regarding the wireless communication unit 110, the broadcast receiving module 111 is typically configured to receive a broadcast signal and/or broadcast associated information from an external broadcast managing entity via a broadcast channel. The broadcast channel may include a satellite channel, a terrestrial channel, or both. In some embodiments, two or more broadcast receiving modules 111 may be utilized to facilitate simultaneously receiving of two or more broadcast channels, or to support switching among broadcast channels.

The mobile communication module 112 can transmit and/or receive wireless signals to and from one or more network entities. Typical examples of a network entity include a base station, an external mobile terminal, a server, and the like. Such network entities form part of a mobile communication network, which is constructed according to technical standards or communication methods for mobile communications (for example, Global System for Mobile Communication (GSM), Code Division Multi Access (CDMA), CDMA2000(Code Division Multi Access 2000), Wideband CDMA (WCDMA), High Speed Downlink Packet access (HSDPA), Long Term Evolution (LTE), and the like).

Examples of wireless signals transmitted and/or received via the mobile communication module 112 include audio call signals, video (telephony) call signals, or various formats of data to support communication of text and multimedia messages.

The wireless Internet module 113 is configured to facilitate wireless Internet access. This module may be internally or externally coupled to the mobile terminal 100. The wireless Internet module 113 may transmit and/or receive wireless signals via communication networks according to wireless Internet technologies.

Examples of such wireless Internet access include Wireless LAN (WLAN), Wireless Fidelity (Wi-Fi), Wi-Fi Direct, Digital Living Network Alliance (DLNA), Wireless Broadband (WiBro), Worldwide Interoperability for Microwave Access (WiMAX), High Speed Downlink Packet Access (HSDPA), Long Term Evolution (LTE), and the like. The wireless Internet module 113 may transmit/receive data according to one or more of such wireless Internet technologies, and other Internet technologies as well.

In some embodiments, when the wireless Internet access is implemented according to, for example, WiBro, HSDPA, GSM, CDMA, WCDMA, LTE and the like, as part of a mobile communication network, the wireless Internet module 113 performs such wireless Internet access. As such, the Internet module 113 may cooperate with, or function as, the mobile communication module 112.

The short-range communication module 114 is configured to facilitate short-range communications. Suitable technologies for implementing such short-range communications include BLUETOOTH™, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless USB(Wireless Universal Serial Bus), and the like. The short-range communication module 114 in general supports wireless communications between the mobile terminal 100 and a wireless communication system, communications between the mobile terminal 100 and another mobile terminal 100, or communications between the mobile terminal and a network where another mobile terminal 100 (or an external server) is located, via wireless area networks. One example of the wireless area networks is a wireless personal area networks.

In some embodiments, another mobile terminal 100 may be a wearable device, for example, a smart watch, a smart glass or a head mounted display (HMD), which is able to exchange data with the mobile terminal 100 (or otherwise cooperate with the mobile terminal 100). The short-range communication module 114 may sense or recognize the wearable device, and permit communication between the wearable device and the mobile terminal 100. In addition, when the sensed wearable device is a device which is authenticated to communicate with the mobile terminal 100, the controller 180, for example, may cause transmission of data processed in the mobile terminal 100 to the wearable device via the short-range communication module 114. Hence, a user of the wearable device may use the data processed in the mobile terminal 100 on the wearable device. For example, when a call is received in the mobile terminal 100, the user may answer the call using the wearable device. Also, when a message is received in the mobile terminal 100, the user can check the received message using the wearable device.

The location information module 115 is generally configured to detect, calculate, derive or otherwise identify a position of the mobile terminal. As an example, the location information module 115 includes a Global Position System (GPS) module, a Wi-Fi module, or both. If desired, the location information module 115 may alternatively or additionally function with any of the other modules of the wireless communication unit 110 to obtain data related to the position of the mobile terminal. As one example, when the mobile terminal uses a GPS module, a position of the mobile terminal may be acquired using a signal sent from a GPS satellite. As another example, when the mobile terminal uses the Wi-Fi module, a position of the mobile terminal can be acquired based on information related to a wireless access point (AP) which transmits or receives a wireless signal to or from the Wi-Fi module.

The input unit 120 may be configured to permit various types of input to the mobile terminal 120. Examples of such input include audio, image, video, data, and user input. Image and video input is often obtained using one or more cameras 121. Such cameras 121 may process image frames of still pictures or video obtained by image sensors in a video or image capture mode. The processed image frames can be displayed on the display unit 151 or stored in memory 170. In some cases, the cameras 121 may be arranged in a matrix configuration to permit a plurality of images having various angles or focal points to be input to the mobile terminal 100. As another example, the cameras 121 may be located in a stereoscopic arrangement to acquire left and right images for implementing a stereoscopic image.

The microphone 122 is generally implemented to permit audio input to the mobile terminal 100. The audio input can be processed in various manners according to a function being executed in the mobile terminal 100. If desired, the microphone 122 may include assorted noise removing algorithms to remove unwanted noise generated in the course of receiving the external audio.

The user input unit 123 is a component that permits input by a user. Such user input may enable the controller 180 to control operation of the mobile terminal 100. The user input unit 123 may include one or more of a mechanical input element (for example, a key, a button located on a front and/or rear surface or a side surface of the mobile terminal 100, a dome switch, a jog wheel, a jog switch, and the like), or a touch-sensitive input, among others. As one example, the touch-sensitive input may be a virtual key or a soft key, which is displayed on a touch screen through software processing, or a touch key which is located on the mobile terminal at a location that is other than the touch screen. On the other hand, the virtual key or the visual key may be displayed on the touch screen in various shapes, for example, graphic, text, icon, video, or a combination thereof.

The sensing unit 140 is generally configured to sense one or more of internal information of the mobile terminal, surrounding environment information of the mobile terminal, user information, or the like. The controller 180 generally cooperates with the sending unit 140 to control operation of the mobile terminal 100 or execute data processing, a function or an operation associated with an application program installed in the mobile terminal based on the sensing provided by the sensing unit 140. The sensing unit 140 may be implemented using any of a variety of sensors, some of which will now be described in more detail.

The proximity sensor 141 may include a sensor to sense presence or absence of an object approaching a surface, or an object located near a surface, by using an electromagnetic field, infrared rays, or the like without a mechanical contact. The proximity sensor 141 may be arranged at an inner region of the mobile terminal covered by the touch screen, or near the touch screen.

The proximity sensor 141, for example, may include any of a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and the like. When the touch screen is implemented as a capacitance type, the proximity sensor 141 can sense proximity of a pointer relative to the touch screen by changes of an electromagnetic field, which is responsive to an approach of an object with conductivity. In this case, the touch screen (touch sensor) may also be categorized as a proximity sensor.

The term "proximity touch" will often be referred to herein to denote the scenario in which a pointer is positioned to be proximate to the touch screen without contacting the touch screen. The term "contact touch" will often be referred to herein to denote the scenario in which a pointer makes physical contact with the touch screen. For the position corresponding to the proximity touch of the pointer relative to the touch screen, such position will correspond to a position where the pointer is perpendicular to the touch screen. The proximity sensor 141 may sense proximity touch, and proximity touch patterns (for example, distance, direction, speed, time, position, moving status, and the like). In general, controller 180 processes data corresponding to proximity touches and proximity touch patterns sensed by the proximity sensor 141, and cause output of visual information on the touch screen. In addition, the controller 180 can control the mobile terminal 100 to execute different operations or process different data according to whether a touch to a point on the touch screen is either a proximity touch or a contact touch.

A touch sensor can sense a touch applied to the touch screen, such as display unit 151, using any of a variety of touch methods. Examples of such touch methods include a resistive type, a capacitive type, an infrared type, and a magnetic field type, among others.

As one example, the touch sensor may be configured to convert changes of pressure applied to a specific part of the display unit 151, or convert capacitance occurring at a specific part of the display unit 151, into electric input signals. The touch sensor may also be configured to sense not only a touched position and a touched area, but also touch pressure and/or touch capacitance. A touch object is generally used to apply a touch input to the touch sensor. Examples of typical touch objects include a finger, a touch pen, a stylus pen, a pointer, or the like.

When a touch input is sensed by a touch sensor, corresponding signals may be transmitted to a touch controller. The touch controller may process the received signals, and then transmit corresponding data to the controller 180. Accordingly, the controller 180 may sense which region of the display unit 151 has been touched. Here, the touch controller may be a component separate from the controller 180, the controller 180, and combinations thereof.

In some embodiments, the controller 180 may execute the same or different controls according to a type of touch object that touches the touch screen or a touch key provided in addition to the touch screen. Whether to execute the same or different control according to the object which provides a touch input may be decided based on a current operating state of the mobile terminal 100 or a currently executed application program, for example.

The touch sensor and the proximity sensor may be implemented individually, or in combination, to sense various types of touches. Such touches includes a short (or tap) touch, a long touch, a multi-touch, a drag touch, a flick touch, a pinch-in touch, a pinch-out touch, a swipe touch, a hovering touch, and the like.

If desired, an ultrasonic sensor may be implemented to recognize position information relating to a touch object using ultrasonic waves. The controller 180, for example, may calculate a position of a wave generation source based on information sensed by an illumination sensor and a plurality of ultrasonic sensors. Since light is much faster than ultrasonic waves, the time for which the light reaches the optical sensor is much shorter than the time for which the ultrasonic wave reaches the ultrasonic sensor. The position of the wave generation source may be calculated using this fact. For instance, the position of the wave generation source may be calculated using the time difference from the time that the ultrasonic wave reaches the sensor based on the light as a reference signal.

The camera 121 typically includes at least one a camera sensor (CCD, CMOS etc.), a photo sensor (or image sensors), and a laser sensor.

Implementing the camera 121 with a laser sensor may allow detection of a touch of a physical object with respect to a 3D stereoscopic image. The photo sensor may be laminated on, or overlapped with, the display device. The photo sensor may be configured to scan movement of the physical object in proximity to the touch screen. In more detail, the photo sensor may include photo diodes and transistors at rows and columns to scan content received at the photo sensor using an electrical signal which changes according to the quantity of applied light. Namely, the photo sensor may calculate the coordinates of the physical object according to variation of light to thus obtain position information of the physical object.

The display unit 151 is generally configured to output information processed in the mobile terminal 100. For example, the display unit 151 may display execution screen information of an application program executing at the mobile terminal 100 or user interface (UI) and graphic user interface (GUI) information in response to the execution screen information.

In some embodiments, the display unit 151 may be implemented as a stereoscopic display unit for displaying stereoscopic images.

A typical stereoscopic display unit may employ a stereoscopic display scheme such as a stereoscopic scheme (a glass scheme), an auto-stereoscopic scheme (glassless scheme), a projection scheme (holographic scheme), or the like.

The audio output module 152 is generally configured to output audio data. Such audio data may be obtained from any of a number of different sources, such that the audio data may be received from the wireless communication unit 110 or may have been stored in the memory 170. The audio data may be output during modes such as a signal reception mode, a call mode, a record mode, a voice recognition mode, a broadcast reception mode, and the like. The audio output module 152 can provide audible output related to a particular function (e.g., a call signal reception sound, a message reception sound, etc.) performed by the mobile terminal 100. The audio output module 152 may also be implemented as a receiver, a speaker, a buzzer, or the like.

A haptic module 153 can be configured to generate various tactile effects that a user feels, perceive, or otherwise experience. A typical example of a tactile effect generated by the haptic module 153 is vibration. The strength, pattern and the like of the vibration generated by the haptic module 153 can be controlled by user selection or setting by the controller. For example, the haptic module 153 may output different vibrations in a combining manner or a sequential manner.

Besides vibration, the haptic module 153 can generate various other tactile effects, including an effect by stimulation such as a pin arrangement vertically moving to contact skin, a spray force or suction force of air through a jet orifice or a suction opening, a touch to the skin, a contact of an electrode, electrostatic force, an effect by reproducing the sense of cold and warmth using an element that can absorb or generate heat, and the like.

The haptic module 153 can also be implemented to allow the user to feel a tactile effect through a muscle sensation such as the user's fingers or arm, as well as transferring the tactile effect through direct contact. Two or more haptic modules 153 may be provided according to the particular configuration of the mobile terminal 100.

An optical output module 154 can output a signal for indicating an event generation using light of a light source. Examples of events generated in the mobile terminal 100 may include message reception, call signal reception, a missed call, an alarm, a schedule notice, an email reception, information reception through an application, and the like.

A signal output by the optical output module 154 may be implemented in such a manner that the mobile terminal emits monochromatic light or light with a plurality of colors. The signal output may be terminated as the mobile terminal senses that a user has checked the generated event, for example.

The interface unit 160 serves as an interface for external devices to be connected with the mobile terminal 100. For example, the interface unit 160 can receive data transmitted from an external device, receive power to transfer to elements and components within the mobile terminal 100, or transmit internal data of the mobile terminal 100 to such external device. The interface unit 160 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating authority of using the mobile terminal 100 and may include a user identity module (UIM), a subscriber identity module (SIM), a universal subscriber identity module (USIM), and the like. In addition, the device having the identification module (also referred to herein as an "identifying device") may take the form of a smart card. Accordingly, the identifying device can be connected with the terminal 100 via the interface unit 160.

When the mobile terminal 100 is connected with an external cradle, the interface unit 160 can serve as a passage to allow power from the cradle to be supplied to the mobile terminal 100 or may serve as a passage to allow various command signals input by the user from the cradle to be transferred to the mobile terminal there through. Various command signals or power input from the cradle may operate as signals for recognizing that the mobile terminal is properly mounted on the cradle.

The memory 170 can store programs to support operations of the controller 180 and store input/output data (for example, phonebook, messages, still images, videos, etc.). The memory 170 may store data related to various patterns of vibrations and audio which are output in response to touch inputs on the touch screen.

The memory 170 may include one or more types of storage mediums including a Flash memory, a hard disk, a solid state disk, a silicon disk, a multimedia card micro type, a card-type memory (e.g., SD or DX memory, etc), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, an optical disk, and the like. The mobile terminal 100 may also be operated in relation to a network storage device that performs the storage function of the memory 170 over a network, such as the Internet.

The controller 180 may typically control the general operations of the mobile terminal 100. For example, the controller 180 may set or release a lock state for restricting a user from inputting a control command with respect to applications when a status of the mobile terminal meets a preset condition.

The controller 180 can also perform the controlling and processing associated with voice calls, data communications, video calls, and the like, or perform pattern recognition processing to recognize a handwriting input or a picture drawing input performed on the touch screen as characters or images, respectively. In addition, the controller 180 can control one or a combination of those components in order to implement various exemplary embodiments disclosed herein.

The power supply unit 190 receives external power or provide internal power and supply the appropriate power required for operating respective elements and components included in the mobile terminal 100. The power supply unit 190 may include a battery, which is typically rechargeable or be detachably coupled to the terminal body for charging.

The power supply unit 190 may include a connection port. The connection port may be configured as one example of the interface unit 160 to which an external charger for supplying power to recharge the battery is electrically connected.

As another example, the power supply unit 190 may be configured to recharge the battery in a wireless manner without use of the connection port. In this example, the power supply unit 190 can receive power, transferred from an external wireless power transmitter, using at least one of an inductive coupling method which is based on magnetic induction or a magnetic resonance coupling method which is based on electromagnetic resonance.

Various embodiments described herein may be implemented in a computer-readable medium, a machine-readable medium, or similar medium using, for example, software, hardware, or any combination thereof.

Referring now to FIGS. 1B and 1C, the mobile terminal 100 is described with reference to a bar-type terminal body. However, the mobile terminal 100 may alternatively be implemented in any of a variety of different configurations. Examples of such configurations include watch-type, clip-type, glasses-type, or as a folder-type, flip-type, slide-type, swing-type, and swivel-type in which two and more bodies are combined with each other in a relatively movable manner, and combinations thereof. Discussion herein will often relate to a particular type of mobile terminal (for example, bar-type, watch-type, glasses-type, and the like). However, such teachings with regard to a particular type of mobile terminal will generally apply to other types of mobile terminals as well.

Here, the terminal body may be understood to indicate the mobile terminal 100 regarded as at least one integrated body.

The mobile terminal 100 will generally include a case (for example, frame, housing, cover, and the like) forming the appearance of the terminal. In this embodiment, the case is formed using a front case 101 and a rear case 102. Various electronic components are incorporated into a space formed between the front case 101 and the rear case 102. At least one middle case may be additionally positioned between the front case 101 and the rear case 102.

The display unit 151 is shown located on the front side of the terminal body to output information. As illustrated, a window 151 a of the display unit 151 may be mounted to the front case 101 to form the front surface of the terminal body together with the front case 101.

In some embodiments, electronic components may also be mounted to the rear case 102. Examples of such electronic components include a detachable battery 191, an identification module, a memory card, and the like. Rear cover 103 is shown covering the electronic components, and this cover may be detachably coupled to the rear case 102. Therefore, when the rear cover 103 is detached from the rear case 102, the electronic components mounted to the rear case 102 are externally exposed.

As illustrated, when the rear cover 103 is coupled to the rear case 102, a side surface of the rear case 102 is partially exposed. In some cases, upon the coupling, the rear case 102 may also be completely shielded by the rear cover 103. In some embodiments, the rear cover 103 may include an opening for externally exposing a camera 121b or an audio output module 152b.

The cases 101, 102, 103 may be formed by injection-molding synthetic resin or may be formed of a metal, for example, stainless steel (STS), aluminum (Al), titanium (Ti), or the like.

As an alternative to the example in which the plurality of cases form an inner space for accommodating components, the mobile terminal 100 may be configured such that one case forms the inner space. In this example, a mobile terminal 100 having a uni-body is formed in such a manner that synthetic resin or metal extends from a side surface to a rear surface.

If desired, the mobile terminal 100 may include a waterproofing unit (not shown) for preventing introduction of water into the terminal body. For example, the waterproofing unit may include a waterproofing member which is located between the window 151a and the front case 101, between the front case 101 and the rear case 102, or between the rear case 102 and the rear cover 103, to hermetically seal an inner space when those cases are coupled.

The mobile terminal 100 may be provided with the display unit 151, the first and second audio output modules 152a,152b, the proximity sensor 141, the illumination sensor 142, the optical output unit 154, the first and second cameras 121a, 121b, the first and second manipulation units 123a, 123b, the microphone 122, the interface unit 160, etc.

As shown in FIGS. 1B and 1C, the mobile terminal 100 will be explained under an assumption that the display unit 151, the first audio output module 152a, the proximity sensor 141, the illumination sensor 142, the optical output unit 154, the first camera 121 a, and the first manipulation unit 123a are located on a front surface of the terminal body, the second manipulation unit 123b, the microphone 122 and the interface unit 160 are located on a side surface of the terminal body, and the second audio output module 152b and the second camera 121b are located on a rear surface of the terminal body.

However, it is to be understood that alternative arrangements are possible and within the teachings of the instant disclosure. Some components may be omitted or rearranged. For example, the first manipulation unit 123a may not be located on the front surface of the terminal body, and the second audio output module 152b may be located on the side surface of the terminal body rather than the rear surface of the terminal body.

The display unit 151 is generally configured to output information processed in the mobile terminal 100. For example, the display unit 151 may display execution screen information of an application program executing at the mobile terminal 100 or user interface (UI) and graphic user interface (GUI) information in response to the execution screen information.

The display unit 151 outputs information processed in the mobile terminal 100. The display unit 151 may be implemented using one or more suitable display devices. Examples of such suitable display devices include a liquid crystal display (LCD), a thin film transistor-liquid crystal display (TFT-LCD), an organic light emitting diode (OLED), a flexible display, a 3-dimensional (3D) display, an e-ink display, and combinations thereof.

The display unit 151 may be implemented using two display devices, which can implement the same or different display technology. For instance, a plurality of the display units 151 may be arranged on one side, either spaced apart from each other, or these devices may be integrated, or these devices may be arranged on different surfaces.

The display unit 151 may also include a touch sensor which senses a touch input received at the display unit. When a touch is input to the display unit 151, the touch sensor may be configured to sense this touch and the controller 180, for example, may generate a control command or other signal corresponding to the touch. The content which is input in the touching manner may be a text or numerical value, or a menu item which can be indicated or designated in various modes.

The touch sensor may be configured in a form of a film having a touch pattern, disposed between the window 151 a and a display on a rear surface of the window 151 a, or a metal wire which is patterned directly on the rear surface of the window 151 a. Alternatively, the touch sensor may be integrally formed with the display. For example, the touch sensor may be disposed on a substrate of the display or within the display.

The display unit 151 may also form a touch screen together with the touch sensor. Here, the touch screen may serve as the user input unit 123 (see FIG. 1A). Therefore, the touch screen may replace at least some of the functions of the first manipulation unit 123a.

The first audio output module 152a may be implemented in the form of a speaker to output voice audio, alarm sounds, multimedia audio reproduction, and the like.

The window 151 a of the display unit 151 will typically include an aperture to permit audio generated by the first audio output module 152a to pass. One alternative is to allow audio to be released along an assembly gap between the structural bodies (for example, a gap between the window 151a and the front case 101). In this case, a hole independently formed to output audio sounds may not be seen or is otherwise hidden in terms of appearance, thereby further simplifying the appearance and manufacturing of the mobile terminal 100.

The optical output module 154 can be configured to output light for indicating an event generation. Examples of such events include a message reception, a call signal reception, a missed call, an alarm, a schedule notice, an email reception, information reception through an application, and the like. When a user has checked a generated event, the controller can control the optical output unit 154 to stop the light output.

The first camera 121 a can process image frames such as still or moving images obtained by the image sensor in a capture mode or a video call mode. The processed image frames can then be displayed on the display unit 151 or stored in the memory 170.

The first and second manipulation units 123a and 123b are examples of the user input unit 123, which may be manipulated by a user to provide input to the mobile terminal 100. The first and second manipulation units 123a and 123b may also be commonly referred to as a manipulating portion, and may employ any tactile method that allows the user to perform manipulation such as touch, push, scroll, or the like. The first and second manipulation units 123a and 123b may also employ any non-tactile method that allows the user to perform manipulation such as proximity touch, hovering, or the like.

The drawing illustrates the first manipulation unit 123a as a touch key, but possible alternatives include a mechanical key, a push key, a touch key, and combinations thereof.

Input received at the first and second manipulation units 123a and 123b may be used in various ways. For example, the first manipulation unit 123a may be used by the user to provide an input to a menu, home key, cancel, search, or the like, and the second manipulation unit 123b may be used by the user to provide an input to control a volume level being output from the first or second audio output modules 152a or 152b, to switch to a touch recognition mode of the display unit 151, or the like.

As another example of the user input unit 123, a rear input unit (not shown) may be located on the rear surface of the terminal body. The rear input unit can be manipulated by a user to provide input to the mobile terminal 100. The input may be used in a variety of different ways. For example, the rear input unit may be used by the user to provide an input for power on/off, start, end, scroll, control volume level being output from the first or second audio output modules 152a or 152b, switch to a touch recognition mode of the display unit 151, and the like. The rear input unit may be configured to permit touch input, a push input, or combinations thereof.

The rear input unit may be located to overlap the display unit 151 of the front side in a thickness direction of the terminal body. As one example, the rear input unit may be located on an upper end portion of the rear side of the terminal body such that a user can easily manipulate it using a forefinger when the user grabs the terminal body with one hand. Alternatively, the rear input unit can be positioned at most any location of the rear side of the terminal body.

Embodiments that include the rear input unit may implement some or all of the functionality of the first manipulation unit 123a in the rear input unit. As such, in situations where the first manipulation unit 123a is omitted from the front side, the display unit 151 can have a larger screen.

As a further alternative, the mobile terminal 100 may include a finger scan sensor which scans a user's fingerprint. The controller 180 can then use fingerprint information sensed by the finger scan sensor as part of an authentication procedure. The finger scan sensor may also be installed in the display unit 151 or implemented in the user input unit 123.

The microphone 122 is shown located at an end of the mobile terminal 100, but other locations are possible. If desired, multiple microphones may be implemented, with such an arrangement permitting the receiving of stereo sounds.

The interface unit 160 may serve as a path allowing the mobile terminal 100 to interface with external devices. For example, the interface unit 160 may include one or more of a connection terminal for connecting to another device (for example, an earphone, an external speaker, or the like), a port for near field communication (for example, an Infrared Data Association (IrDA) port, a Bluetooth port, a wireless LAN port, and the like), or a power supply terminal for supplying power to the mobile terminal 100. The interface unit 160 may be implemented in the form of a socket for accommodating an external card, such as Subscriber Identification Module (SIM), User Identity Module (UIM), or a memory card for information storage.

The second camera 121b is shown located at the rear side of the terminal body and includes an image capturing direction that is substantially opposite to the image capturing direction of the first camera unit 121a. If desired, second camera 121 a may alternatively be located at other locations, or made to be moveable, in order to have a different image capturing direction from that which is shown.

The second camera 121b can include a plurality of lenses arranged along at least one line. The plurality of lenses may also be arranged in a matrix configuration. The cameras may be referred to as an "array camera." When the second camera 121b is implemented as an array camera, images may be captured in various manners using the plurality of lenses and images with better qualities.

A flash 124 is shown adjacent to the second camera 121b. When an image of a subject is captured with the camera 121b, the flash 124 may illuminate the subject.

The second audio output module 152b can be located on the terminal body. The second audio output module 152b may implement stereophonic sound functions in conjunction with the first audio output module 152a, and may be also used for implementing a speaker phone mode for call communication.

At least one antenna for wireless communication may be located on the terminal body. The antenna may be installed in the terminal body or formed by the case. For example, an antenna which configures a part of the broadcast receiving module 111 (refer to FIG.1A) may be retractable into the terminal body. Alternatively, an antenna may be formed using a film attached to an inner surface of the rear cover 103, or a case that includes a conductive material.

A power supply unit 190 (refer to FIG.1A) for supplying power to the mobile terminal 100 may include a battery 191, which is mounted in the terminal body or detachably coupled to an outside of the terminal body.

The battery 191 may receive power via a power source cable connected to the interface unit 160. Also, the battery 191 can be recharged in a wireless manner using a wireless charger. Wireless charging may be implemented by magnetic induction or electromagnetic resonance.

The rear cover 103 is shown coupled to the rear case 102 for shielding the battery 191, to prevent separation of the battery 191, and to protect the battery 191 from an external impact or from foreign material. When the battery 191 is detachable from the terminal body, the rear case 103 may be detachably coupled to the rear case 102.

An accessory for protecting an appearance or assisting or extending the functions of the mobile terminal 100 can also be provided on the mobile terminal 100. As one example of an accessory, a cover or pouch for covering or accommodating at least one surface of the mobile terminal 100 may be provided. The cover or pouch may cooperate with the display unit 151 to extend the function of the mobile terminal 100. Another example of the accessory is a touch pen for assisting or extending a touch input to a touch screen.

In the present invention, information processed in the mobile terminal may be displayed on a flexible display. Hereinafter, this will be explained in more with reference to the attached drawings.

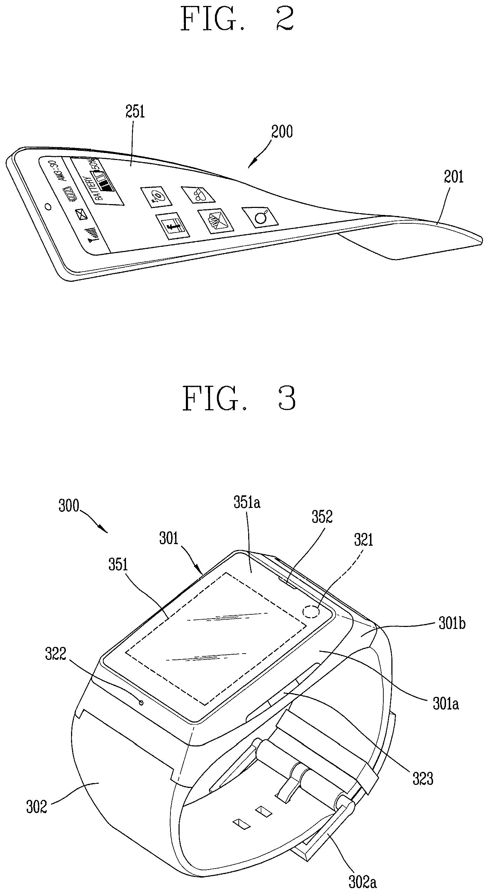

FIG. 2 is a conceptual view illustrating a modified example of a mobile terminal 200 according to the present invention.

As shown, the flexible display unit 251 may be configured to be deformable by an external force. This deformation may include any of curving, bending, folding, twisting, rolling, and combinations thereof. The deformable display unit 251 may also be referred to as a 'flexible display unit' or 'bendable display unit'. In some implementations, the flexible display unit 251 may include a general flexible display, electronic paper (also known as e-paper), and combinations thereof. That is, the flexible display unit 251 means a display unit of which at least part is foldable in a flexible manner.

The flexible display is generally formed as a lightweight, non-fragile display, which still exhibits characteristics of a conventional flat panel display, but is instead fabricated on a flexible substrate which can be deformed as noted previously.

The term e-paper may be used to refer to a display technology employing the characteristic of a general ink, and is different from the conventional flat panel display in view of using reflected light. E-paper is generally understood as changing displayed information using a twist ball or via electrophoresis using a capsule.

When in a state that the flexible display unit 251 is not deformed (for example, in a state with an infinite radius of curvature and referred to as a first state), a display region of the flexible display unit 251 includes a generally flat surface. When in a state that the flexible display unit 251 is deformed from the first state by an external force (for example, a state with a finite radius of curvature and referred to as a second state), the display region may become a curved surface or a bent surface. As illustrated, information displayed in the second state may be visual information output on the curved surface. The visual information may be realized in such a manner that a light emission of each unit pixel (sub-pixel) arranged in a matrix configuration is controlled independently. The unit pixel denotes an elementary unit for representing one color.

According to one alternative embodiment, the first state of the flexible display unit 251 may be a curved state (for example, a state of being curved from up to down or from right to left), instead of being in flat state. In this embodiment, when an external force is applied to the flexible display unit 251, the flexible display unit 251 may transition to the second state such that the flexible display unit is deformed into the flat state (or a less curved state) or into a more curved state.

If desired, the flexible display unit 251 may implement a flexible touch screen using a touch sensor in combination with the display. When a touch is received at the flexible touch screen, the controller 180 (refer to FIG. 1A) can execute certain control corresponding to the touch input. In general, the flexible touch screen is configured to sense touch and other input while in both the first and second states.

One option is to configure the mobile terminal 200 according to a modified example of the present invention to include a deformation sensor which senses the deforming of the flexible display unit 251. The deformation sensor may be included in the sensing unit 140 (refer to FIG. 1A).

The deformation sensor may be located in the flexible display unit 251 or a case 201 to sense information related to the deforming of the flexible display unit 251. Examples of such information related to the deforming of the flexible display unit 251 may be a deformed direction, a deformed degree, a deformed position, a deformed amount of time, an acceleration that the deformed flexible display unit 251 is restored, and the like. Alternatively, such information may include various information sensible by bending of the flexible display unit 251.

In some embodiments, the controller 180 or other component can change information displayed on the flexible display unit 251, or generate a control signal for controlling a function of the mobile terminal 200, based on the information related to the deforming of the flexible display unit 251. Such information is typically sensed by the deformation sensor.

The mobile terminal 200 may include the case 201 for accommodating the flexible display unit 251 therein. The case 201 may be formed to be deformable together with the flexible display unit 251 by an external force, taking into account the characteristic of the flexible display unit 251.

A battery (not shown in this figure) located in the mobile terminal 200 may also be deformable in cooperation with the flexible display unit 251, taking into account the characteristic of the flexible display unit 251. One technique to implement such a battery is to use a stack and folding method of stacking battery cells.

In accordance with still further embodiments, a mobile terminal may be configured as a device which is wearable on a human body. Such devices go beyond the usual technique of a user grasping the mobile terminal using their hand. Examples of the wearable device include a smart watch, a smart glass, a head mounted display (HMD), and the like.

In some embodiments, another mobile terminal (which may be configured similarly to mobile terminal 100) may be a wearable device, for example, a smart watch, a smart glass or a head mounted display (HMD), which is able to exchange data with the mobile terminal 100 (or otherwise cooperate with the mobile terminal 100). The short-range communication module 114 may sense or recognize the wearable device, and permit communication between the wearable device and the mobile terminal 100. In addition, when the sensed wearable device is a device which is authenticated to communicate with the mobile terminal 100, the controller 180, for example, may cause transmission of data processed in the mobile terminal 100 to the wearable device via the short-range communication module 114. Hence, a user of the wearable device may use the data processed in the mobile terminal 100 on the wearable device. For example, when a call is received in the mobile terminal 100, the user may answer the call using the wearable device. Also, when a message is received in the mobile terminal 100, the user can check the received message using the wearable device.

FIG. 3 is a perspective view illustrating one example of a watch-type mobile terminal 300 in accordance with another exemplary embodiment.

As illustrated in FIG. 3, the watch-type mobile terminal 300 includes a main body 301 with a display unit 351 and a band 302 connected to the main body 301 to be wearable on a wrist.

The main body 301 may include a case having a certain appearance. As illustrated, the case may include a first case 301 a and a second case 301 b cooperatively defining an inner space for accommodating various electronic components. Other configurations are possible. For instance, a single case may alternatively be implemented, with such a case being configured to define the inner space, thereby implementing a mobile terminal 300 with a uni-body.

The watch-type mobile terminal 300 can perform wireless communication, and an antenna for the wireless communication can be installed in the main body 301. The antenna may extend its function using the case. For example, a case including a conductive material may be electrically connected to the antenna to extend a ground area or a radiation area.

The display unit 351 is shown located at the front side of the main body 301 so that displayed information is viewable to a user. In some embodiments, the display unit 351 includes a touch sensor so that the display unit can function as a touch screen. As illustrated, window 351 a is positioned on the first case 301 a to form a front surface of the terminal body together with the first case 301 a.

The illustrated embodiment includes audio output module 352, a camera 321, a microphone 322, and a user input unit 323 positioned on the main body 301. When the display unit 351 is implemented as a touch screen, additional function keys may be minimized or eliminated. For example, when the touch screen is implemented, the user input unit 323 may be omitted.

The band 302 is commonly worn on the user's wrist and may be made of a flexible material for facilitating wearing of the device. As one example, the band 302 may be made of fur, rubber, silicon, synthetic resin, or the like. The band 302 may also be configured to be detachable from the main body 301. Accordingly, the band 302 may be replaceable with various types of bands according to a user's preference.

In one configuration, the band 302 may be used for extending the performance of the antenna. For example, the band may include therein a ground extending portion (not shown) electrically connected to the antenna to extend a ground area.

The band 302 may include fastener 302a. The fastener 302a may be implemented into a buckle type, a snap-fit hook structure, a Velcro® type, or the like, and include a flexible section or material. The drawing illustrates an example that the fastener 302a is implemented using a buckle.

Description will now be given in detail of embodiments related to a control method that can be implemented in the mobile terminal according to the present invention, with reference to the accompanying drawings.

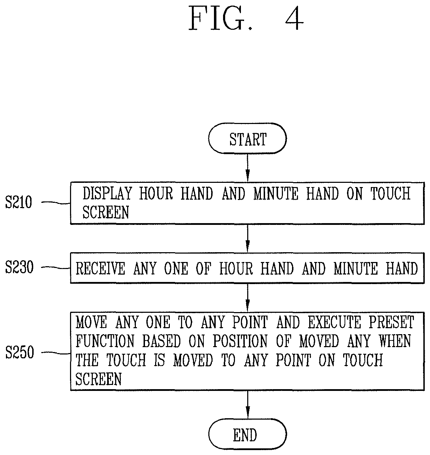

FIG. 4 is a representative flowchart illustrating a control method according to the present invention.

First, the hour hand and the minute hand are displayed on a touch screen 151 (S210).

The touch screen 151 may be configured such that it is converted into an active state that lighting is turned on and an inactive state that the lighting is turned off. The touch screen 151 can display time information in the active state.

Here, the time information may include an index consisting of characters indicating the time, and an indication hand including a hour hand outputted to indicate an index corresponding to an hour as time passes, a minute hand outputted to indicate an index corresponding to a minute as time passes, and a second hand outputted to indicate an index corresponding to a second as time passes. The index, the hour hand, the minute hand and the second hand may be displayed in various types based on a user's setting.

The controller 180 is configured to control the touch screen 151 such that the hour hand and the minute hand indicate the current time. As a result, a user can see the current time through the touch screen of the mobile terminal without a separate control command.

Next, a touch applied either to the hour hand, or to the minute hand may be received (S230). In other words, the touch may be received to a region where any one of the hour hand or the minute hand is displayed.

Hereinafter, one of the hour hand and the minute hand to which the touch is applied is referred to as 'any one', and the other to which the touch is not applied is referred to as 'a remaining one'.

Meanwhile, to prevent a malfunction due to a touch that is not intended by a user, a touch applied to the any one may be limited to a long touch that a touch is executed long for a reference time to one point of the touch screen. In other words, when a short touch that is applied for a shorter time than a reference time is applied to the any one, the controller 180 ignores it. That is, the controller 180 restricts any function from being executed by a short touch. However, when a long touch is applied to the any one, other touches which are consecutively moved after the long touch are awaited.

When the touch is moved to any point on the touch screen 151, the controller 180 moves the any one to the any point, and executes a preset function based on the position of the moved any one (S250).

As the touch is consecutively moved, the controller 180 may consecutively move the position of the any one, and may select at least one of the functions executable at the mobile terminal, based on the position of the moved any one. And when the touch is released, the selected function may be executed.

The controller 180 may execute a preset function based on the position of the moved any one. That is, in the mobile terminal according to one embodiment of the present invention, a function or an application that is being executed in the mobile terminal may be controlled in correspondence to a movement of the any one. Further, according to the mobile terminal in accordance with one embodiment of the present invention, it is possible to execute a function that is executable or operable in the mobile terminal, though not being currently executed. Thus, a user may perform a control with respect to at least one of functions executable in the mobile terminal through a simple gesture to move at least one of the hour hand and the minute hand, without applying a separate manipulation to the mobile terminal.

Here, the functions executable in the mobile terminal may mean all types of functions which are executable or operable in the mobile terminal. For instance, one of the executable functions may be an application which is installed to the mobile terminal. For instance, 'any function is executed' may mean "any application is executed or operated'.

For another instance, a function executable in the mobile terminal may be a function to receive an event. Here, the received event may include a message reception event, a call reception event, and the like. Meanwhile, the event may be an event which is generated from an application installed to a mobile terminal.

For still another instance, the function executable in a mobile terminal may be a function required in a basic driving of a mobile terminal. For instance, the function required in a basic operation of a mobile terminal may include a function to turn on/off the lighting provided in the display unit 151, a function to convert a mobile terminal from a release state into a lock state, or from a lock state into a release state, a function to set a communications network, and a function to change setting information of a mobile terminal.

Meanwhile, when the touch is released at any point, the controller 180 may calculate the time corresponding to the moved any one position and the remaining one position, and control at least one function among the functions executable at the mobile terminal based on the calculated time. Hereinafter, the time corresponding to the position of the moved any one and the remaining one is referred to as 'calculated time'.

Meanwhile, the calculated time is differently calculated depending on a movement direction of the touch applied to the any one. For instance, when the any one is moved in a clockwise direction, the calculated time may be a future time on the basis of the current time. For another instance, when the any one is moved in a counterclockwise direction, the calculated time may be a past time on the basis of the current time.

Like the operation of an ordinary watch, when a minute hand takes a turn in a clockwise direction in a state that the current time is "Jan. 01, 2015, 10:10", the calculated time becomes "Jan. 01, 2015, 11:10", and when the minute hand takes a turn in a counterclockwise direction in a state that the current time is "Jan. 01, 2015, 10:10", the calculated time becomes Jan. 01, 2015, 09:10". When an hour hand takes a turn in a clockwise direction in a state that the current time is "Jan. 01, 2015, 10:10", the calculated time becomes "Jan. 01, 2015, 22:10", and when the hour hand takes a turn in a counterclockwise direction, the calculated time becomes "December 31, 2014, 22:10".

Meanwhile, the controller 180 executes at least one function among the functions executable in a mobile terminal based on the calculated time, and the function controlled in correspondence to the release of the touch may be varied according to at least one of the types of the any one (the hour hand, the minute hand and the second hand), the calculated time, and the state of the current mobile terminal.

Examining the any one type in more detail, the controller 180 may perform a different control according to one of the hour hand, the minute hand and the second hand which is moved by a touch.

More specifically, when the hour hand is moved, the controller 180 may display preset screen information on the touch screen 151, instead of the time information including the hour hand and the minute hand. For instance, when the any one is an hour hand, the controller 180 may display a time range including the current time and the calculated time on the touch screen 151, or search information based on the time range and then display the searched information on the touch screen 151.

On the other hand, when a minute hand is moved, setting of the function being executed in the mobile terminal may be changed while displaying time information, setting of an application corresponding to screen information outputted to the mobile terminal may be changed, or setting of a function corresponding to screen information outputted to the mobile terminal may be changed. For instance, when the any one is a minute hand, the controller 180 may set a new alarm with respect to the calculated time, or execute a quiet mode that sets a call, a warning and a notification in a silent state from the current time to the calculated time.

Next, the calculated time will be described. When the calculated time is earlier than the current time, the controller 180 performs a preset first function, and when the calculated time is later than the current time, the controller 180 performs a second function which is different from the first function. That is, different functions may be executed according to the comparison result of the calculated time with the current time.

For instance, when the calculated time is earlier than the current time, information related to an event which is generated from at least one application before the current time may be displayed on the touch screen 151.

The application has the concept including widget, or a home launcher, and may mean all kinds of programs which are operable in a mobile terminal. Thus, the application may include a web browser, a video reproduction, a message transmission/reception, a scheduler, a program executing an update function of an application, and the like.

The event may be generated, for instance, when there is a missed call, when there is an application to be updated, when a message is received, and in case of a charging, a power on or off of a terminal, an LCD awake key, an alarm, an incoming call, a missed notification, and the like.

For another instance, when specific information is received through a wireless communications unit of a terminal, it may mean that an event is generated from an application related to the specific information, and the controller 180 may sense it. Alternatively, when an item that is inputted by a user is listed in the schedule, and it is the date corresponding to the item, it may mean that an event is generated from the scheduler application.

For another instance, when the calculated time is later than the current time, information related to a notification which is set to be outputted after the current time may be displayed on the touch screen 151.

The notification is set to output an alarm in at least one of visual, aural and tactile methods, and may mean all kinds of alarms which will be outputted at a future preset time based on the current time. For instance, the notification may include an event, a to-do, an EPG (Electronic Program Guide), etc. reminder which are registered in the calendar.

Next, different controls may be performed according to the current state of the mobile terminal. As described above, when the calculated time is earlier than the current time, the first function is executed, but when the calculated time is later than the current time, the second function is executed. However, when the state of the mobile terminal satisfies the preset condition, a third function is executed instead of the first function, and the third function is executed instead of the second function. In other words, when the calculated time is earlier than the current time, the third function is executed, and when the calculated time is later than the current time, a fourth function is executed, in a state that the state of the mobile terminal satisfies the preset condition.

Specifically, the mobile terminal according to the present invention may include an inertial measurement unit, and the state of the mobile terminal may be measured (or sensed) based on a signal outputted from the inertial measurement unit. The measured state is compared whether to satisfy the preset condition and it may be determined as to whether the measured state satisfies the preset condition when a touch applied to the any one is released.

Here, the inertial measurement unit may provide a remarkable functionality to a user in the type of an application, such as a screen rotation, movement recognition, gaming, counting of the number of steps, an individual navigation, and a sense of free falls. Recently, a 6-axis inertial measurement unit including a 3-axis accelerometer and a 3-axis gyroscope in a single chip, and a 9-axis measurement unit including a 3-axis accelerometer, a 3-axis gyroscope and a 3-axis geomagnetic field in a single chip are provided.

The sensor fusion software provided in the inertial measurement unit intelligently incorporates data outputted from an individual sensor to a combo product in order to enhance the capacity of the application or the system. Thus, it is possible to implement much more smooth, rapid and precise movement. By combining data outputted from various sensors to correct incorrectness of an individual sensor, it is possible to calculate precise information on the position and direction.

The inertial measurement unit may calculate the acceleration and rotation of a main body of the mobile terminal, and may calculate and record the speed, direction and gravity of the main body. Such an inertial measurement unit is included in the sensing unit 140 described in FIG. 1.

Meanwhile, the preset condition may mean that the front of the main body is in a gravity direction, or the front of the main body is within a preset range based on the gravity direction. In other words, the preset condition is set to correspond to the state that a user wearing the mobile terminal controls the mobile terminal in a lying state.

There may be different needs related to use of the mobile terminal in a case where a user controls the mobile terminal in a lying state and in a sitting down or standing state. For instance, moving the hour hand or the minute hand in a lying state may mean that it is intended to execute the function related to complete a daily work, or to a sleep or rest, and moving the hour hand or minute hand in a sitting down or standing state may mean that it is intended to execute the function related to the work done or the work to do. Reflecting this, the mobile terminal according to the present invention may perform different controls according to as to whether the state of the main body satisfies the preset condition. That is, it is possible to perform different controls according to the state of the mobile terminal and the calculated time.

Hereinafter, the operation of the mobile terminal will be more specifically described with reference to the accompanying drawings in accordance with the control method of FIG. 4.

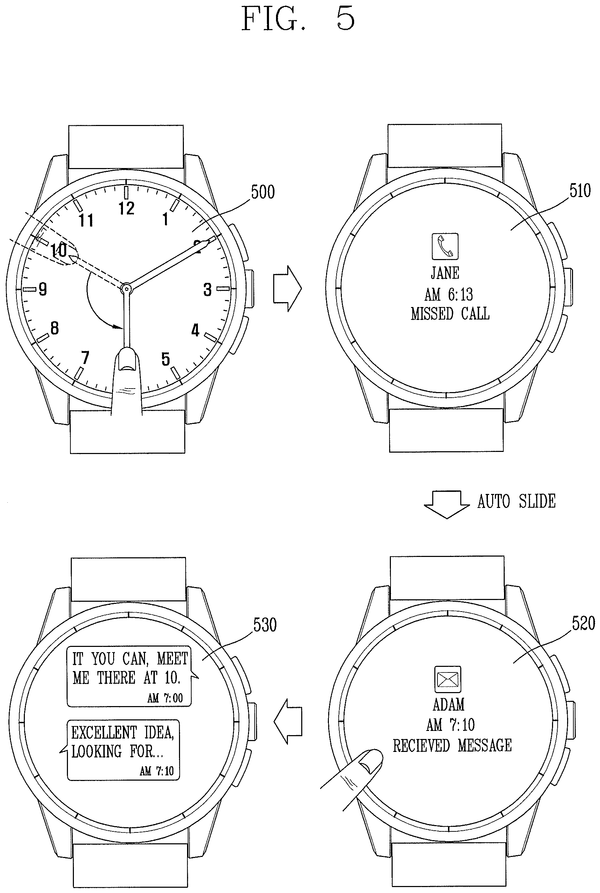

First, a description will be given of the operation of the mobile terminal in response to the movement of the hour hand. FIG. 5 is a conceptual view for explaining an operation in case that the hour hand is moved in a counterclockwise direction in the mobile terminal according to the present invention.

Referring to FIG. 5, the touch screen 151 may display time information 500 in an active state. The time information 500 may include at least one of an index consisting of characters indicating the time, the hour hand, the minute hand, and the second hand, and indicate the current time. According to the example shown in FIG. 5, the current time corresponds to "10:10".

When the hour hand moves in a counterclockwise direction based on the position where the hour hand is displayed in a state that the time information 500 is displayed, the controller 180 changes the display position of the hour hand in correspondence to the movement of the hour hand.

When the touch is released from any point on the touch screen 151, the controller 180 calculates the time corresponding to the moved position of the hour hand and the minute hand, and performs a preset function based on the calculated time. According to an example shown in FIG. 5, the calculated time corresponds to "06:10".

As the calculated time corresponds to the past compared to the current time, the controller 180 performs a time machine view function.

Here, the time machine view function means a function to display on the touch screen information related to an event generated from at least one application from the calculated time to the current time after returning to the past corresponding to the calculated time.

When the time machine view function is executed, the controller 180 sets a time range including the current time and the calculated time, searches an event generated from at least one application within the set time range, and displays the searched information on the touch screen 151.

When the searched information is plural, any one information searched at each unit time may be displayed on the touch screen. The controller 180 may display the searched information one by one in the order of time (or in the reverse order).

For instance, referring to FIG. 5, the time information may be set as "06:10 through 10:10", and the number of the event generated within the time range may be two in total. The first event may be a missed call event from Ms. Jane at 06:13, and the second event may be a message reception event from Mr. Adam at 07:10. When the touch is released, the controller 180 performs the time machine view function and may display the event generated until the current time based on the calculated time on the touch screen 151 at each unit time in the order of time. That is, the first information 510 related to the first event is displayed, and when the unit time has passed, the second information 520 related to the second event is displayed on the touch screen 151.

The controller 180 may use a slide method in case of converting any one information among the searched plural information into another searched information. Specifically, in case of conversion from the first information 510 into the second information 520, the first information 510 may gradually disappear in the direction of one side of the touch screen 151, and the second information 520 may gradually appear from another side of the touch screen 151 in the direction of the one side. The controller 180 may automatically perform the information conversion as above mentioned at every unit time. This may be referred to as an 'auto slide'.

Here, the unit time may mean the time that a user can sufficiently read information displayed on the touch screen, for instance, it may be set from 3 seconds to 5 seconds. The unit time may be varied according to the amount of information displayed on the touch screen, and modified in various types according to the embodiments.

When all the searched events are displayed at every unit time, the controller 180 terminates the time machine view function, and displays time information on the touch screen 151.

Meanwhile, when a touch is applied to the touch screen 151 in a state that information related to the searched event is displayed on the touch screen 151, the controller 180 displays detailed information related to the searched event on the touch screen 151. Specifically, the controller 180 performs an application associated with the searched event, and displays an execution screen related to the event searched from the application on the touch screen 151. For instance, referring to FIG. 5, when a touch is applied in a state that information 520 related to the message reception event is displayed, the controller 180 may perform the message application, and display an execution screen corresponding to the message reception event. That is, an execution screen 530 including a message received from Mr. Adam at 07:10 is displayed on the touch screen 151.

According to the above embodiment, a user can visually check the events that have been generated from the mobile terminal in the past using a simple gesture to turn the hour hand in a counterclockwise direction, without any need to execute the applications one by one in order to check the events that have been generated in the past.

Meanwhile, when a touch applied to any one of the hour hand and the minute hand is released from any point on the touch screen 151 after moving to the touch screen 151, the controller 180 may set a time range based on the current time and the calculated time, and indicate the set time range.

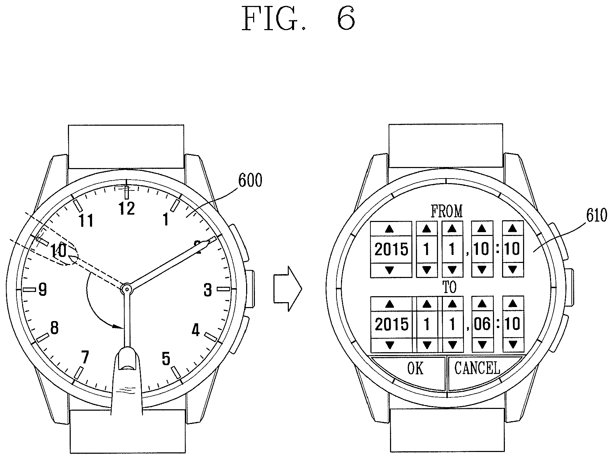

FIG. 6 is a conceptual view for explaining an operation to set a time range and guide the set time range when the hour hand or the minute hand is moved by a touch in the mobile terminal according to the present invention.

Referring to FIG. 6, a touch input to move the hour hand indicating 10 o'clock to 6 o'clock may be sensed in a state that the time information 600 is displayed on the touch screen 151. In other words, the controller 180 may sense the first touch applied to the hour hand, and the second touch that consecutively moves to a point corresponding to 6 o'clock starting from the first touch. The controller 180 displays the hour hand by moving it from "the region corresponding to 10 o'clock" to "the region corresponding to 6 o'clock" in response to the touch input.

When the touch input is released, the controller 180 calculates the time corresponding to the moved hour hand and the minute hand, and sets a time range including the calculated time and the current time. Before executing the preset function based on the position of the moved hour hand, the controller 180 may display the set time range on the touch screen 151. For instance, as shown in FIG. 6, the screen information 610 including the "10:10" corresponding to the current time and "06:10" corresponding to the calculated time may be displayed on the touch screen 151. The screen information 610 may further include a user interface formed to reset the set time range. The controller 180 may reset the set time range based on the user input applied to the user interface.

That is, a specific function is not immediately executed as the touch is released, but the calculated time is allowed to be visually checked by a user, and when the calculated time is incorrect, an interface to simply reset the calculated time may be provided.

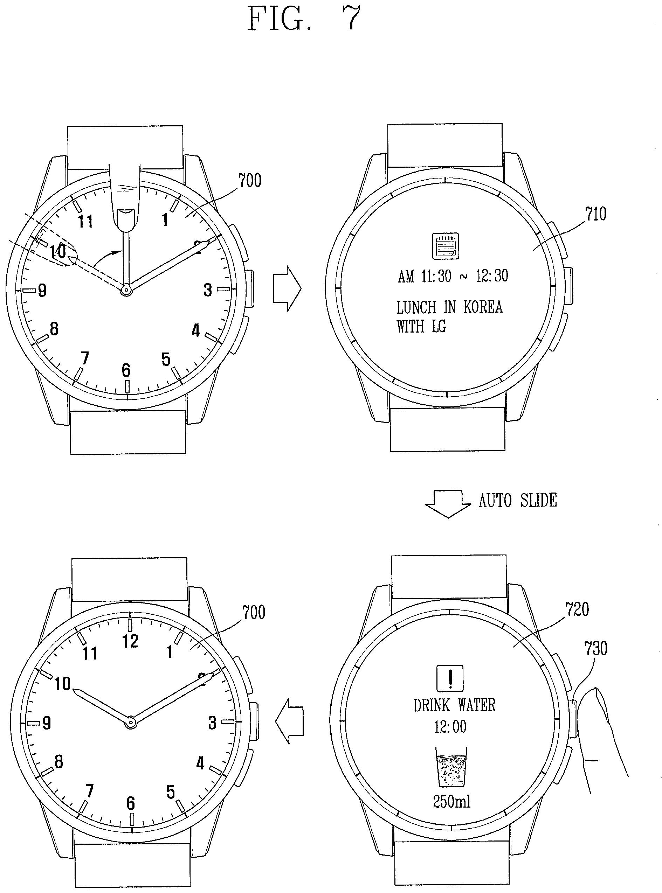

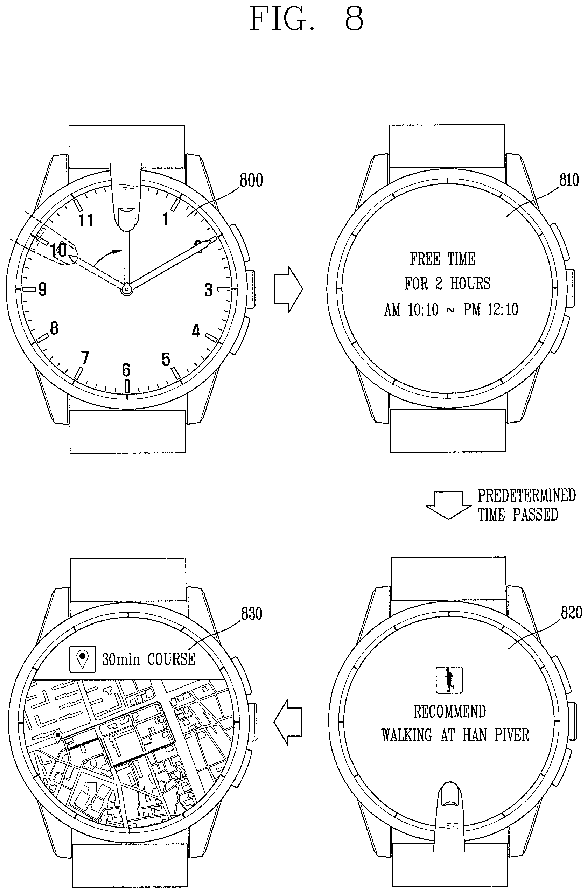

Further, the description will be given of the operation of the mobile terminal in a case where the hour hand is moved in a clockwise direction. FIGS. 7 and 8 are conceptual views for explaining an operation in case that the hour hand is moved in a clockwise direction in the mobile terminal according to the present invention.

Referring to FIG. 7, the touch screen 151 may display the time information 700 in an active state. According to the example shown in FIG. 7, the current time corresponds to "10:10".

When a touch applied to the hour hand is moved in a clockwise direction based on the position where the hour hand is displayed in a state that the time information 700 is displayed, the controller 180 changes the indication position of the hour hand in correspondence to the movement of the touch.

When the touch is released at any point on the touch screen 151, the controller 180 calculates the time corresponding to the position of the moved hour hand and the position of the minute hand, and performs the preset function based on the calculated time. According to the example shown in FIG. 7, the calculated time corresponds to "12:10".

As the calculated time corresponds to the future in comparison with the current time, the controller 180 performs an upcoming event view function.

Here, the upcoming event view function means a function to search a notification that is set to output an alarm from the current time through one time point of the future corresponding to the calculated time, and display information related to the searched notification on the touch screen.

When the upcoming event view function is executed, the controller 180 sets the time range including the current time and the calculated time, searches at least one notification that is set to output an alarm within the set time range, and displays the searched notification on the touch screen 151.

When the searched information is plural, any one information searched at every unit time may be displayed on the touch screen. The controller 180 may display the searched information one by one in the order of time (or, in the reverse order of time).

For instance, referring to FIG. 7, the time information may be set as "10:10 through 12:10", and the notification that is set to be outputted within the time range may be two in total. The first notification may be a notification to notify a lunch time, and a second notification may be a notification to notify a recommended amount of water intake. When the touch is released, the controller 180 may perform the upcoming event view function, and display the notification that is set to be outputted within the set time range on the touch screen 151 in the order of time at every unit time. That is, the first information 710 related to the first notification is displayed, and when the unit time has passed, the second information 720 related to the second notification is displayed on the touch screen 151. The controller 180 may display information related to the notification on the touch screen 151 using the above described slide method.

Meanwhile, when a touch is applied to the touch screen 151 in a state that information related to the notification is displayed on the touch screen 151, the controller 180 displays detailed information related to the notification on the touch screen 151. Specifically, the controller 180 performs an application associated with the notification, and displays an execution screen related to the event searched from the application on the touch screen 151.

Meanwhile, when a user input unit 123 (refer to FIG. 1), provided at a side surface of the main body, is pressed while the time machine view function or the upcoming event view function is executed, the controller 180 terminates the time machine view function or the upcoming event view function and controls the touch screen 151 to display the time information 700. In the wristwatch type mobile terminal 100, the user input unit 123 may be a crown. That is, a user can control the mobile terminal to output again time information by pressing the crown while the information related to the set time range is displayed, or applying a preset user input to the crown.

Meanwhile, though the upcoming event view function is executed, but no notification that is set to be outputted within the set time range may exist. In such a case, the controller 180 may recommend an exercise program or a rest program based on the exercise data to a user. For instance, referring to FIG. 8, when a notification, that is set to be outputted from the current time, "10:10" to the calculated time, "12:10", does not exist, the current time and the calculated time are indicated, and screen information 810 notifying that no set notification exists may be displayed.

When a user input is applied within the reference time from the time point of displaying the screen information 810, the controller 180 terminates the display of the screen information 810. On the other hand, when a user input is not applied within the reference time from the time point of displaying the screen information 810, the controller 180 selects an exercise program or a rest program, based on the user's exercise data stored in the memory 170 (refer to FIG. 1). For instance, when the user's amount of exercise is less than the average amount of exercise, an exercise program may be selected, and when the user's amount of exercise is in excess of the average amount of exercise, a rest program may be selected.

To this end, the controller 180 generates and updates in real time or periodically the exercise data using the sensors provided in the main body. The generation method of exercise data is a well-known technology and thus detailed description thereof will not be given for simplicity purpose.

Meanwhile, the exercise program may be a program that guides a course where walking or running can be performed by setting a position where the main body is located as a starting point and a point of arrival. For instance, referring to FIG. 8, when an exercise program is selected, the controller 180 may display a walking course that starts from the place where the main body is located and returns to the same place on the touch screen 151. In this instance, map information showing the walking course, the time to be required to have a walk along the course, consumed calories, and the number of required steps may be displayed together.

Meanwhile, the rest program may be a program that recommends a sleep by considering the sleep analysis and the nutrition analysis, or intake of water, replay of a video that was stopped in the middle of reproduction.

As a result, the mobile terminal can inform in advance to a user of upcoming notification.

According to the above embodiment, the mobile terminal can inform in advance a user of upcoming notification in response to a gesture to turn the hour hand in a clockwise direction, and when a notification does not exist, can induce a motion (for instance, an exercise or a rest) that is most necessary to a user. Also, a user can check at one time notifications remaining up to the specific time of the future.

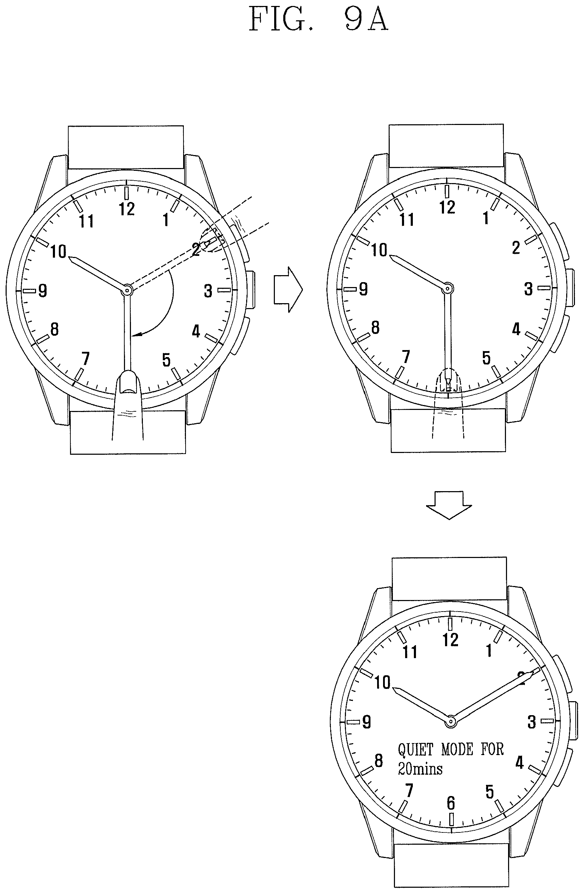

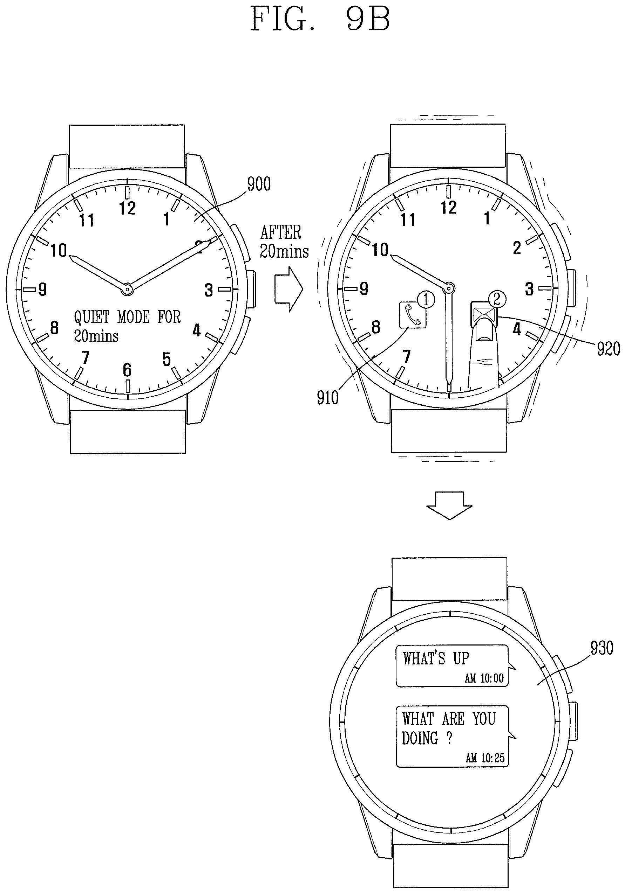

FIGS. 9A and 9B are conceptual views for explaining an operation that the minute hand is moved in a clockwise direction in the mobile terminal according to the present invention.

Referring to FIG. 9A, when the minute hand moves in a clockwise direction by a touch, the controller 180 performs a quiet mode from the current time to the calculated time. From the current time to the calculated time is set as the time to execute the quiet mode. In this instance, when the minute hand turns more than a round in a clockwise direction, the time to execute the quiet mode may be set for more than 60 minutes.

When the quiet mode is set, the controller 180 may display on the touch screen 151 the notification information that informs a quiet mode is executed, together with the time information. The notification information may include at least one of the starting time that the quiet mode is started, the finish time and the remaining time until the quiet mode is terminated.

Here, the quiet mode means a function to control a ring tone, an alarm, and the like not to be outputted. When the quiet mode is executed, reception of a call is automatically rejected, and a notification of reception of message is not outputted, though a message is received. For instance, even though a message is received during execution of the quiet mode, neither a vibration, nor a notification sound is outputted. Further, time information is displayed on the touch screen 151, but display of the notification information that informs reception of message is restricted.

Meanwhile, when it is the finish time of the quiet mode as the time has passed, the controller 180 terminates the quiet mode. That is, when the current time is identical to the calculated time, the controller 180 terminates execution of the quiet mode. Further, when there is any reception of a call, or message from outside during execution of the quiet mode, the controller 180 informs the fact that an event is generated while the quiet mode is executed, using at least one of the visual, tactile and aural methods.

For instance, as shown in FIG. 9B, when the quiet mode is executed, the time information and the notification information that informs execution of the quiet mode are displayed on the touch screen 151 in single screen information 900. When a call and two messages are received while the quiet mode is executed, a first icon 910 informing receipt of a call and a second icon 920 informing receipt of messages may be displayed on the touch screen 151 together with the time information, simultaneously with termination of the quiet mode. Meanwhile, when any one of the icons displayed on the touch screen 151 is selected, the controller 180 executes an application associated with the selected one and may display an execution screen in accordance therewith on the touch screen 151.

As a result, a user can simply set the time to execute the quiet mode, and when the quiet mode is terminated, simply check the event that has been generated during execution of the quiet mode.

However, the present invention is not limited to execution of the quiet mode in response to movement of the minute hand by a touch. As another example related to the motion of the mobile terminal according to movement of the minute hand, various functions may be performed, that is, a function to convert a mobile terminal from a release state into a lock state, a function to set a communications network, a function to change the setting information of a mobile terminal, a function to change the setting of the function being operated in the mobile terminal, a function to change the setting of an application related to screen information outputted to the mobile terminal, and a function to change the setting of a function corresponding to screen information outputted to the mobile terminal.

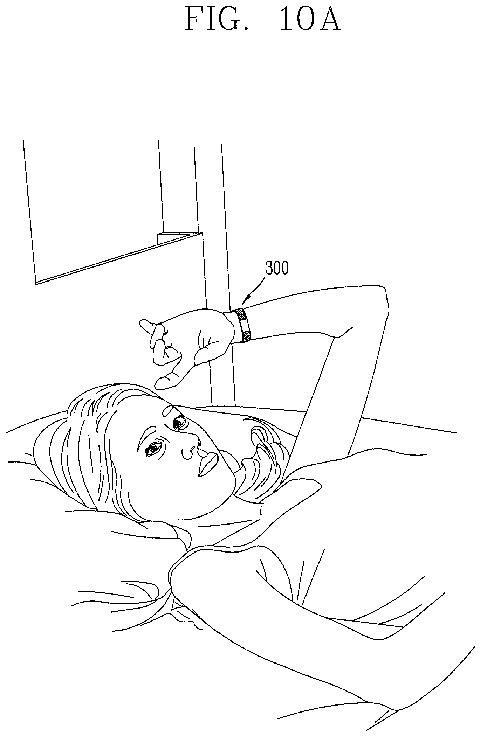

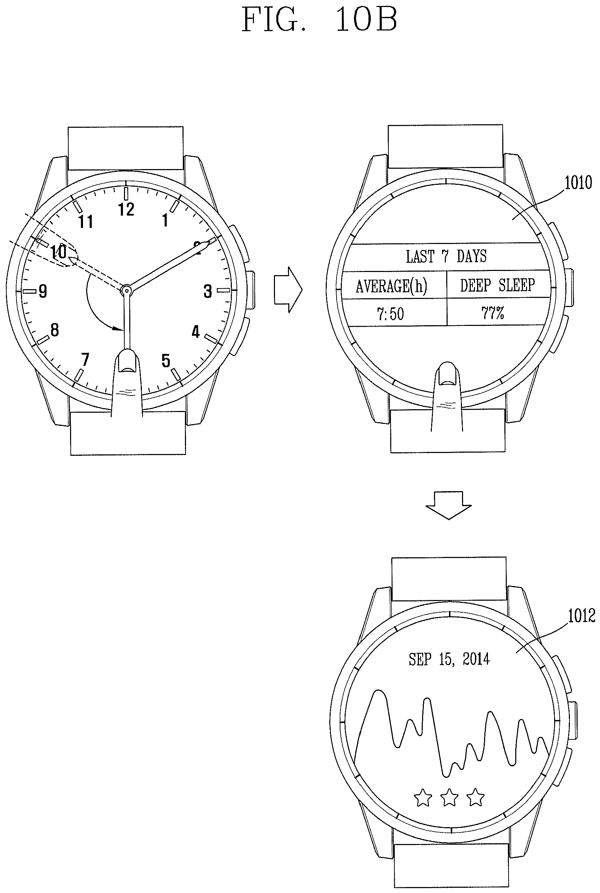

FIG. 10A is a view for explaining a case that the state of the mobile terminal satisfies a preset condition in the mobile terminal according to the present invention, and FIGS. 10B through 10D are views for explaining an operation of the mobile terminal according to a movement of the hour hand or the minute hand when the preset condition is satisfied.

The mobile terminal according to the present invention is provided with an inertial measurement unit, and the state of the mobile terminal can be measured based on the signal outputted from the inertial measurement unit. In addition, the measured state is compared whether to satisfy the preset condition, and when the touch applied to the any one is released, it is possible to determine whether the measured state satisfies the preset condition.

Here, satisfaction of the preset condition means a state that a user manipulates a mobile terminal in a lying state. That is, when the front of the main body is in a gravity direction, or when the direction that the main body is within the preset range based on the gravity direction, the controller 180 may determine that the preset condition is satisfied.

Meanwhile, as the any one moves, a function executable in the mobile terminal is executed based on the position of the moved any one. In this instance, when the calculated time is earlier than the current time, the controller 180 may perform the first function or the third function according to whether or not the state of the mobile terminal satisfies the preset condition. Further, when the calculated time is later than the current time, the controller 180 may perform the second function or the fourth function according to whether or not the state of the mobile terminal satisfies the preset condition.

Here, the first function may correspond to the time machine view function, and the second function may correspond to the upcoming event view function.

The third function, as shown in FIG. 10B, may be a function that displays the past sleep records. The sleep records include a sleep starting time, a sleep end time, a total sleep time, a level of sound sleep (or a depth of sleep), and information related to the sleep pattern. When the hour hand moves to the past in a lying state, the sleep records which have been recorded in the past are displayed so as to aid management of the user's health.

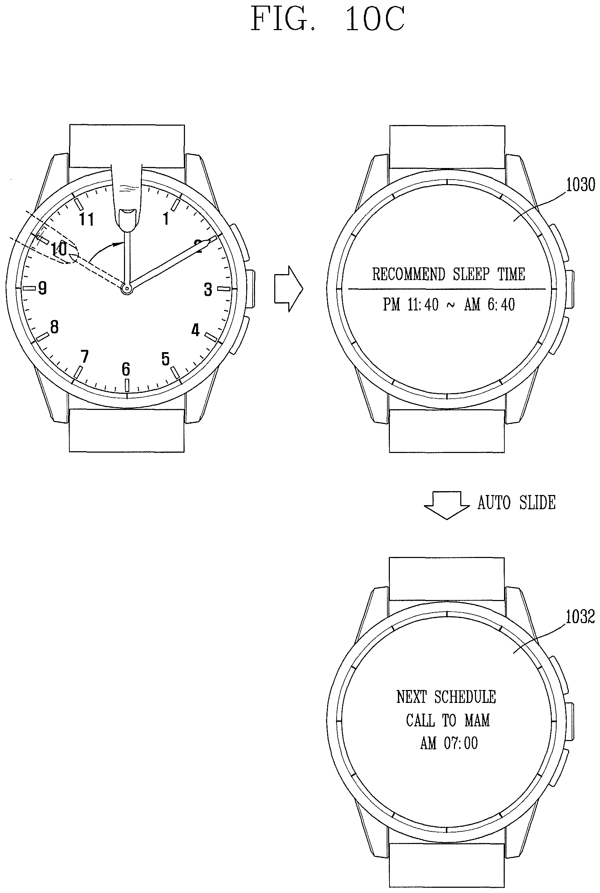

The fourth function, as shown in FIG. 10C, may be a function to display information that informs how much sleep/rest is proper, considering the weather forecast or the user's biorhythm, or a function to display the tomorrow's schedules in the order of time at every unit time. Alternatively, the fourth function may be a function to calculate the wake up time, considering the schedules which have been set for tomorrow, and set a notification such that an alarm is outputted at the set wake up time. Thus, the mobile terminal can perform a role to aid a sleep/rest.

When a touch applied to the minute hand is released after moving in a clockwise direction in a state that the state of a mobile terminal does not satisfy the preset condition, the quiet mode, as described in detail with reference to FIG. 9a, is executed.

On the other hand, when the minute hand moves in a clockwise direction in a state that, in a lying state, that is, a mobile terminal satisfies the preset condition, the controller 180 may set an alarm with respect to the calculated time. More specifically, when a touch applied to the minute hand moves in a clockwise direction in a state that the state of a mobile terminal satisfies the preset condition, the controller 180 calculates the time based on the point that the touch is released, and sets an alarm with respect to the calculated time.

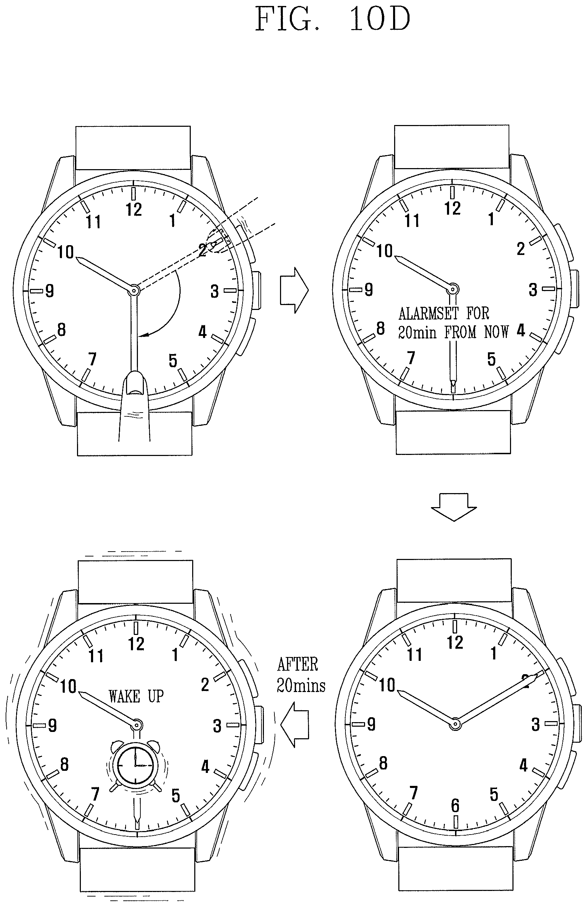

When an alarm is set, as shown in the second drawing of FIG, 10D, the controller 180 may display alarm setting information indicating that an alarm is set, together with the time information indicating the current time on the touch screen 151. The alarm setting information is displayed for a predetermined time and display thereof is terminated after the predetermined time has elapsed. That is, as shown in the third drawing of FIG. 10D, the alarm setting information disappears from the touch screen 151 when the predetermined time has elapsed from the time point of setting the alarm.

Thereafter, when it is the time when the alarm is set, as shown in the fourth drawing of FIG. 10D, the controller 180 outputs the alarm using at least one of the visual, tactile and aural methods.

According to the above embodiments, the mobile terminal performs different functions according as whether a user is lying or not, so that a more artificial intellectual interface can be provided.

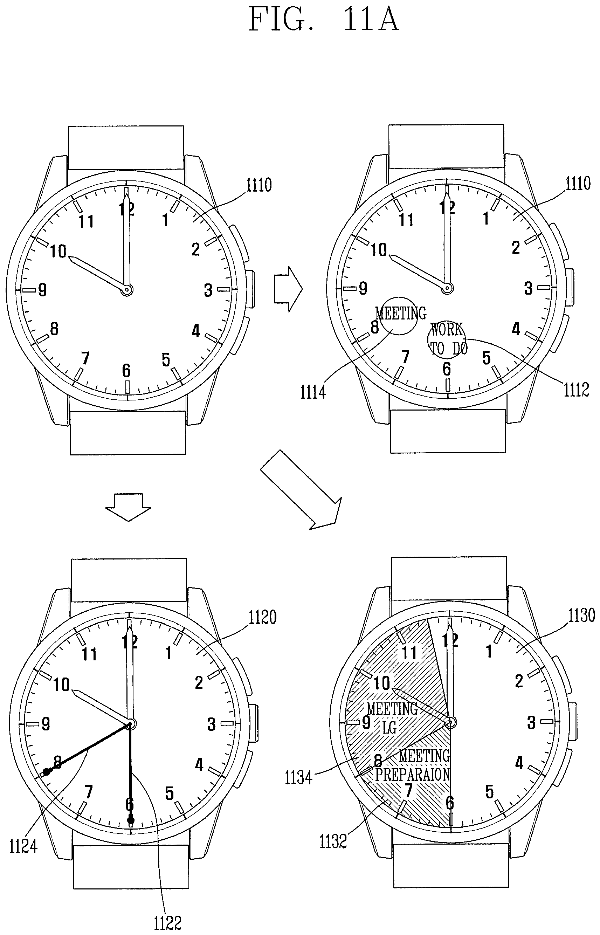

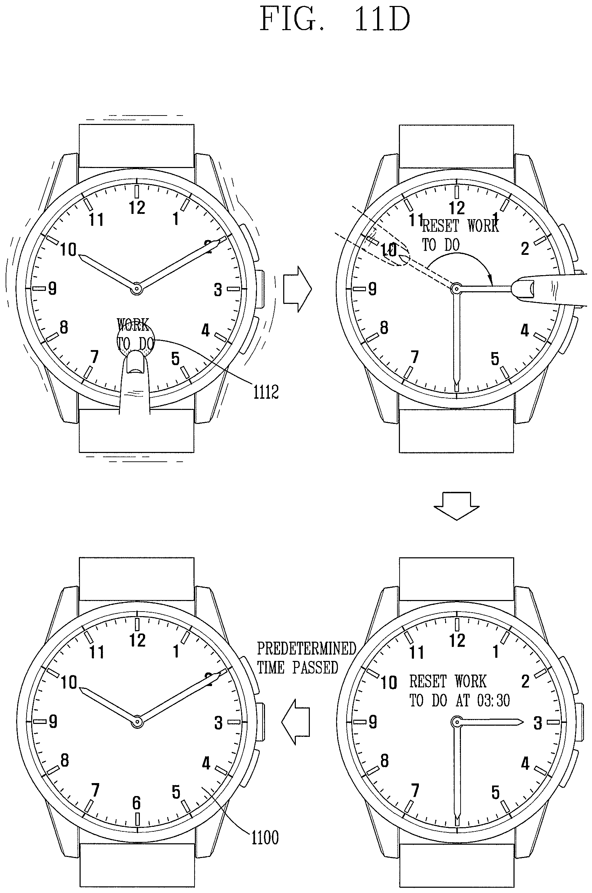

FIGS. 11A through 11C are views for explaining a method to indicate a preset notification in the mobile terminal according to the present invention, and FIG. 11D is a view for explaining a method to reset the preset notification.

When the current time corresponds to any o'clock sharp, the controller 180 may display a notification that is set to be outputted within 60 minutes based on the any o'clock sharp, together with the time information. For instance, as shown in the first drawing of FIG. 11A, when the current time is 09:59, only the time information 1100 is displayed. Thereafter, when the current time is 10 o'clock sharp, the controller 180 may output notifications which have been set within from 10:00 to 10:50 in various methods.

For instance, when a first notification related to the work to do at 10:30 is set and a second notification related to the meeting to be held at 10:40 is set, as shown in FIG. 11A, a first icon 1112 indicating the first notification may be displayed on a position (a position corresponding to 30 minutes) corresponding to the time that the first notification is set, and a second icon 1114 indicating the second notification may be displayed on a position (a position corresponding to 40 minutes) corresponding to the time that the second notification is set. The image may include information related to the notification.

For another instance, a first indication hand 1122 indicating the first notification and a second indication hand 1124 indicating the second notification may be displayed together with the time information 1120.

For still another instance, when the start time of the first notification is set to 10:30 and the end time is set to 10:40, and the start time of the second notification is set to 10:40 and the end time is set to 10:58, as shown in FIG. 11A, a first image indicating the time range of the first notification and a second image indicating the time range of the second notification may be displayed together with the time information 1130.

When it is 11:00 sharp as time has passed, the icon indicating the notification related to 10:00 disappears, and an icon indicating the notification related to 11:00 is newly displayed. That is, whenever it is any o'clock sharp, an alarm which is set to be outputted within 60 minutes based on the any o'clock sharp is displayed together with the time information. As a result, a user can check in advance the predetermined schedule and effectively manage his schedule.

Meanwhile, when a touch applied to the minute hand moves to any point on the touch screen, the controller 180 searches a notification which is set to be outputted between the current time and the calculated time. When one or more notifications are searched, information related to the searched notifications is displayed at the time when the notification is set to be outputted.

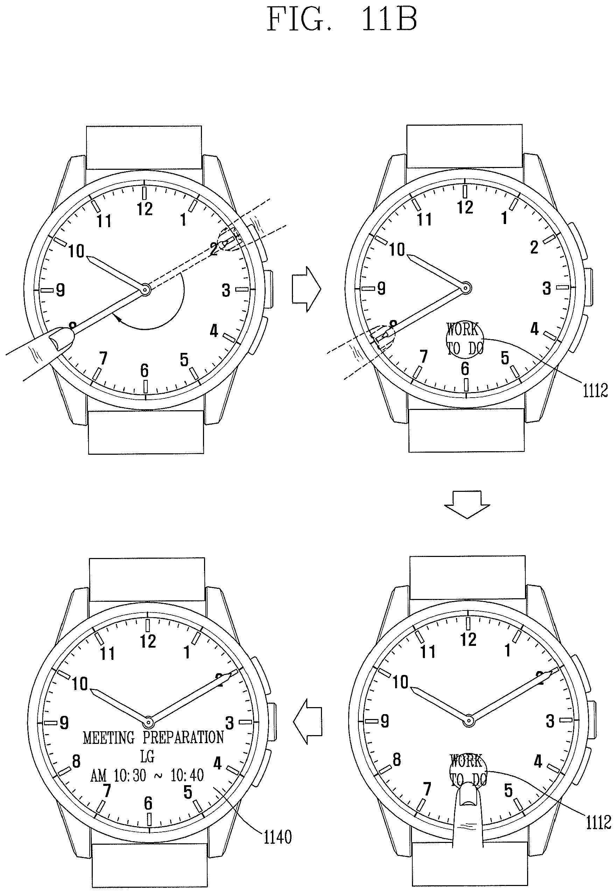

For instance, as shown in FIG. 11B, when the minute hand moves to 10:40 by a touch in a state that the current time is 10:10, the controller 180 searches a notification which is set to be outputted between 10:10 corresponding to the current time and 10:40 corresponding to the calculated time. When a notification that is set to be outputted at 10:30 is searched, the information 1112 related to the searched notification is displayed on a position corresponding to the time when the searched notification is to be outputted.

Thereafter, when the touch is released, the controller 180 moves the hour and minute hands such that they indicate the current time, and consecutively displays information related to the searched notification. When a touch is applied to the information related to the searched notification, the controller 180 displays detailed information 1140 related to the searched notification together with the time information.

Here, the information related to the searched notification may include at least one of the title of the searched notification, an image representatively indicating the notification, and the name and the representative icon of an application associated with the searched notification, and means brief information indicating the searched notification. On the other hand, the detailed information related to the searched notification includes the content of the searched notification, the start time of the schedule, the end time of the schedule, the attendees, and the place, and means detailed information indicating the searched notification.

Meanwhile, when the current time arrives at the time when the searched notification is to be outputted, the controller 180 outputs an alarm corresponding to the searched notification for a reference time. When the reference time has elapsed or a user input is applied, output of the alarm is terminated, and display of the information 1112 related to the searched notification or the detailed information 1114 related to the searched notification is also terminated.

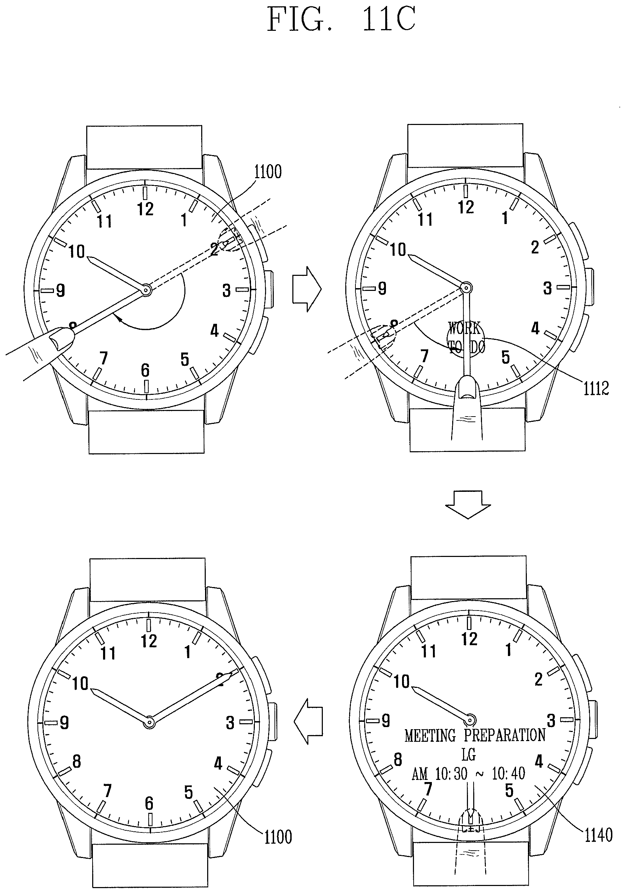

For another instance, as shown in FIG. 11C, when a touch is not released, but the touch moves to a position corresponding to the time when the searched notification is to be outputted in a state that the information 1112 related to the searched notification is displayed, the controller 180 displays the detailed information 1140 related to the searched notification together with the time information, instead of the information 1112 related to the searched notification. Thereafter, when the touch is released, display of the information 1112 related to the searched notification or the detailed information 1140 related to the searched notification is terminated.

According to the above embodiments, a user can select a future one time point using a touch input and simply check whether or not a preset notification exists within the selected future one time point which will be approaching.

Meanwhile, the mobile terminal according to the present invention can provide an interface which is capable of simply resetting the time that the searched notification is to be outputted. For instance, referring to FIG. 11D, a preset touch input may be received to the information related to the specific notification in a state that the information 1112 related to the specific notification is displayed on the touch screen 151 together with the time information.

The preset touch input is a user input to reset the time that is set to output a specific notification, and may be set as one of a long touch that is touched long for a reference time, a double touch that is consecutively touched in plural, and a hovering touch that fingers or the like approaches to a region where information related to the specific notification is displayed, without any direct touch.

When the preset touch input is received to the information related to the specific notification, the controller 180 performs a reset mode of the notification time. When the reset mode is executed, the controller 180 may output a vibration, notification tone and/or blink of a light output unit that inform that the time to output the specific notification may be reset.

Further, when the reset mode is executed, the controller 180 moves the hour hand and minute hand to indicate the time that is set to output the specific notification. For instance, the hour hand and minute hand indicating the current time of 10:10 moves to indicate 10:30 as the reset mode is executed to the notification that is set to be outputted at 10:30.

Thereafter, the controller 180 moves at least one indication position based on the touch input applied to at least one of the hour hand and the minute hand. For instance, as shown in FIG. 11D, when the touch applied to the hour hand indicating 10:00 moves to a position corresponding to 15:00, the hour hand moves from a position indicating10:00 to a position indicating 15:00.

When a user input is not applied for a predetermined time in a state that the at least one is moved, the controller 180 calculates the time based on the moved at least one, and reset the time that is set to output the specific notification to the calculated time. According to the embodiment shown in FIG. 11D, the work to do that is set to be outputted at 10:30 is reset to be outputted at 15:30.

Thus, a user can promptly and easily reset the time when the notification is set.

Though not shown, when the user input unit 123 provided at a side of the main body is pressed in a state that the reset mode is executed, the controller 180 terminates the reset mode, and displays time information indicating the current time on the touch screen 151. Further, when a user input is not inputted for a predetermined time from the time point that the reset mode is executed, the controller 180 may terminate the reset mode, and display time information indicating the current time on the touch screen 151.

Referring to FIGS. 11A through 11D, described above is an embodiment in which a notification is searched when the minute hand moves in a clockwise direction, information related to the searched notification is displayed, and the time that is set to output the searched notification is outputted is reset. The mobile terminal may be operated in the same manner in a case where the minute hand moves in a counterclockwise direction.

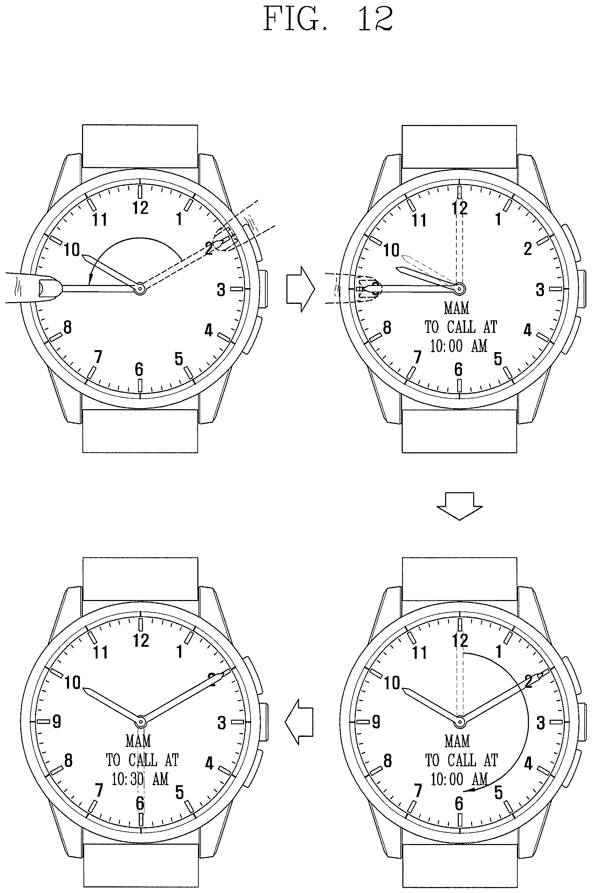

FIG. 12 is a view for explaining a method to reset a notification which has already been outputted in the mobile terminal according to the present invention.

When the minute hand moves in a counterclockwise direction by a touch, the controller 180 searches the notification which has been outputted between the current time and the calculated time. When one or more notifications are searched, the information related to the searched notifications is displayed at the time that the notification is outputted, respectively.

For instance, as shown in FIG. 12, when the minute hand moves in a counterclockwise direction by a touch in a state that the current time is 10:10, the controller 180 searches the notification which has been outputted between 10:10 corresponding to the current time and 09:40 corresponding to the calculated time. When a notification which has been outputted at 10 o'clock sharp is searched, detailed information related to the searched notification is displayed together with the time information.

In this instance, the controller 180 may display a main hour hand and a main minute hand corresponding to the current time and a sub-hour hand and a sub-minute hand indicating the time that is set to output the searched notification on the touch screen 151. For instance, as shown in FIG. 12, the main hour hand and the main minute hand indicating the current time may indicate 10:10, and the sub-hour hand and the sub-minute hand indicating the time that is set to output the searched notification may indicate 10:00.

A user may set the notification that has already been outputted to be outputted again in the future based on the current time, using at least one of the sub-hour hand and the sub-minute hand.

More specifically, the controller 180 receives a touch applied to any one of the sub-hour hand and the sub-minute hand, and changes the indication position of the any one as the touch moves in a clockwise direction. When the touch is released, the controller 180 may calculate the time based on the position of the sub-hour hand and the sub-minute hand, and set the notification which has already been outputted to be outputted again at the calculated time.

For instance, as shown in FIG. 12, the sub-minute hand between the sub-hour hand and the sub-minute hand indicating 10:00 moves to a position indicating 30 minutes, the controller 180 may reset the notification ('MAM TO CALL AT 10:00 AM') which has been outputted at 10 o'clock sharp to be outputted again at 10:30. In other words, a new notification ('MAM TO CALL AT 10:00 AM') having the same content as the notification that has been outputted at 10 o'clock sharp may be set at 10:30.

Meanwhile, the sub-hour hand and the sub-minute hand may be displayed for a predetermined time, or display thereof may be terminated as the user input unit 123 provided at a side of the main body is pressed.

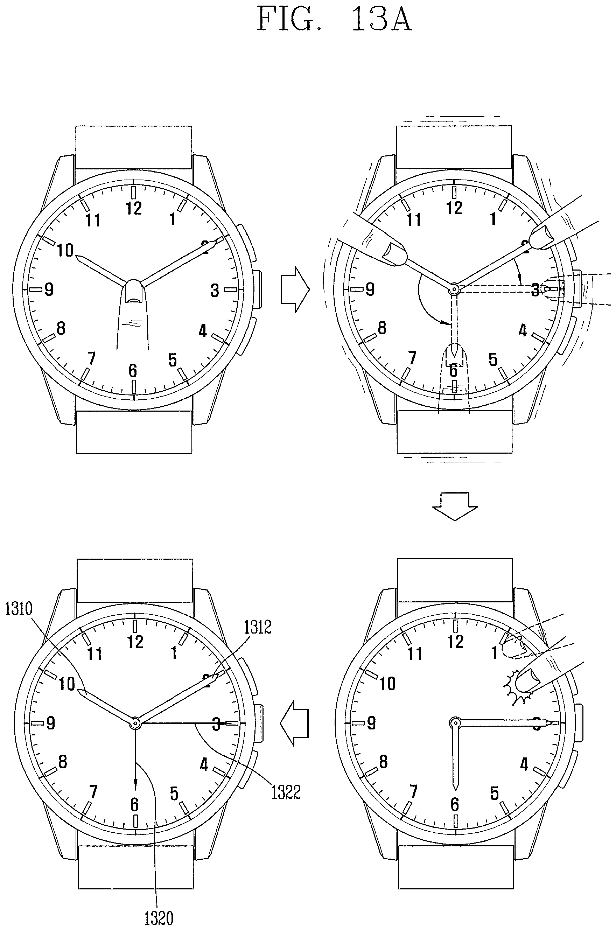

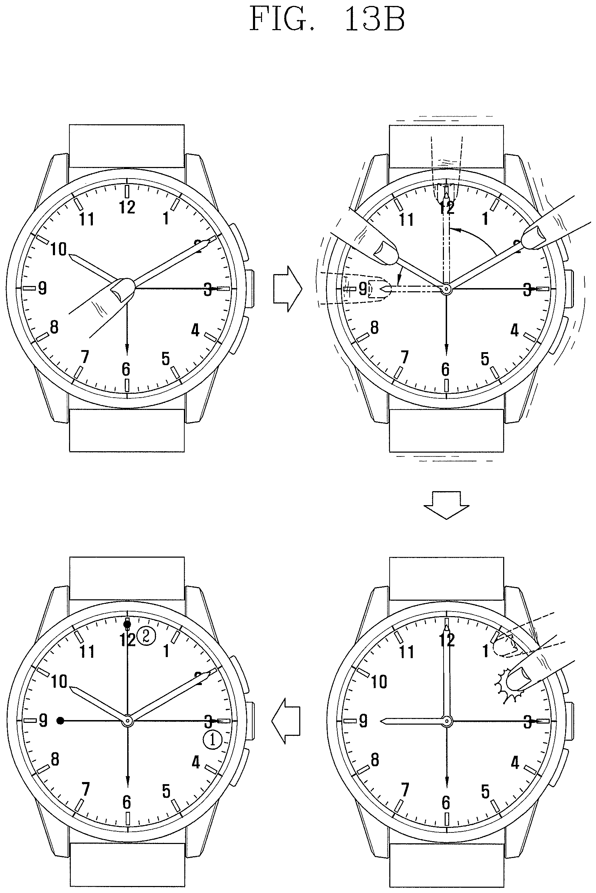

FIGS. 13A and 13B are views for explaining a method to set a new alarm in the mobile terminal according to the present invention.

The screen information according to this embodiment further includes a control point which connects the hour hand with the minute hand in addition to the index and the hour and minute hands. The controller 180 may perform an alarm setting mode based on a touch input applied to the control point. A user can promptly and simply access into the alarm setting mode by applying a touch input to the control point.

Here, the alarm setting mode means a mode that selects a future one time point based on the user input, and sets an alarm that is configured to output a vibration and/or a warning tone at the selected one time point. When the alarm setting mode is executed, the controller 180 may output a vibration and/or a blink of a light output unit indicating that the alarm setting mode is executed.

The indication position of at least one of the hour hand and the minute hand may be changed in a state that the alarm setting mode is executed. For instance, as shown in FIG. 13A, the hour hand indicating 10 o'clock may move to a position indicating 06 o'clock by the first touch, and the minute hand indicating 10 minutes may move to a position indicating 15 minutes by the second touch.

When a user input is not applied for a predetermined time in a state that the hour hand and the minute hand are moved, or the preset touch input is applied, the controller 180 calculates the time corresponding to the hour hand and the minute hand, sets an alarm with respect to the calculated time, and terminates the alarm setting mode. For instance, when the preset user input is applied while the hour hand and the minute hand indicate 06:30, an alarm may be set to be outputted at 06:30. Hereinafter, the alarm which has been set to be outputted at 06:30 is referred to as 'a first alarm'.

The preset touch input shown in FIG. 13 is a double touch that is made in plural by consecutive touches, but the present invention is not limited to this and may be variously changed according to the embodiments.

Meanwhile, when the first alarm is set, the controller 180 controls the touch screen to display the hour hand 1310 and the minute hand 1312 which indicate the current time and the sub-hour hand 1320 and the sub-minute hand 1322 which indicate the time that is set to output the first alarm.

When the current time reaches the time that is set to output the first alarm, the controller 180 terminates display of the first sub-hour hand 1320 and the first sub-minute hand 1322. That is, once the first alarm is outputted, display of the sub-hour hand and sub-minute hand corresponding thereto is terminated.

Meanwhile, in the mobile terminal according to the present invention, a new alarm may be continuously generated in the manner as above described. For instance, as shown in FIG. 13B, when a touch is applied to the control point which connects the hour hand with the minute hand in a state that the hour hand 1310 and the minute hand 1312 indicating the current time and the first sub-hour hand 1320 and the first sub-minute hand 1322 corresponding to the first alarm are displayed, the controller 180 may perform again the alarm setting mode.

A second alarm may be set based on the touch applied to the hour hand and the minute hand indicating the current time and the preset touch input. For instance, as shown in FIG. 13B, the second alarm may be set to be outputted at 9 o'clock sharp. As the second alarm is set, the hour hand and the minute hand indicating the current time, the first sub-hour hand and the first sub-minute hand corresponding to the first alarm, and the second sub-hour hand and the second sub-minute hand corresponding to the second alarm may be displayed on the touch screen.

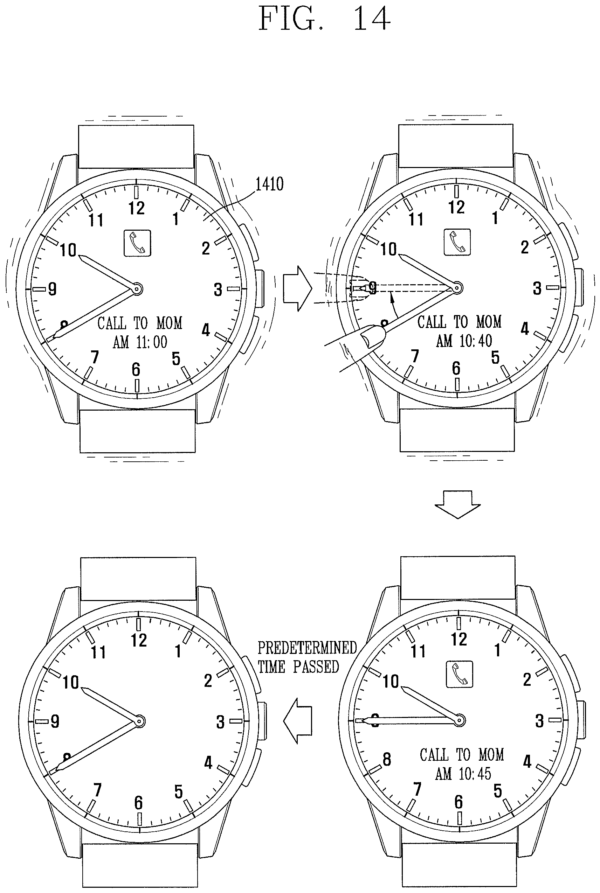

FIG. 14 is a view for explaining a method to reset an alarm while the alarm is outputted in the mobile terminal according to the present invention.

When the current time reaches the time that is set to output the preset alarm, the controller 180 outputs an alarm using at least one of the visual, tactile and aural methods. For instance, as shown in the first drawing of FIG. 14, when the current time reaches 10:40 in a state that the alarm is set to be outputted at 10:40, the alarm information 1410 is outputted together with the time information. The alarm information includes at least one of the content set as an alarm, the time set as an alarm, the title of an application associated with an alarm, and an icon corresponding to the application.

When a touch input to move any one of the hour hand and the minute hand in a clockwise direction is received while the alarm is outputted, the controller 180 moves the any one based on the touch input and terminates outputting of the alarm.

Meanwhile, when the touch input is released, the time corresponding to the position of the moved any one and remaining one is calculated, and a new alarm is set such that an alarm is outputted at the calculated time, or the existing alarm is outputted again. For instance, as shown in FIG. 14, when a touch is released in a state that the minute hand moves from a position indicating 40 minutes to a position indicating 45 minutes, a new alarm may be set at 10:40. Alternatively, it may set such that the alarm set at 10:40 is changed to 10:45, or the alarm set at 10:40 to be outputted again at 10:45.

According to the above embodiment, a user can terminate an alarm with only one input, and set a new alarm as well, and also it is possible to freely set the time that the new alarm is to be outputted according to a user's intention.

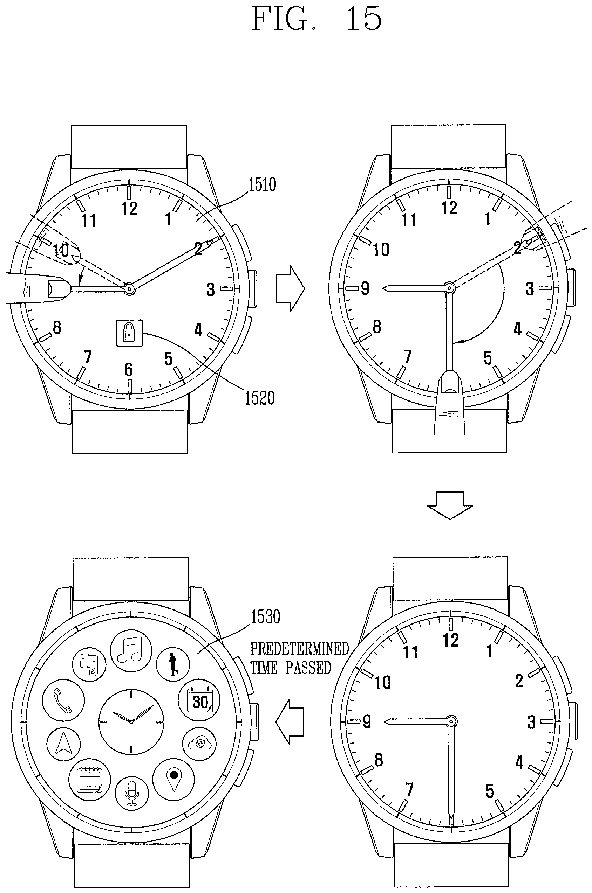

FIG. 15 is a view for explaining a method to receive an input of a password to release a lock state in the mobile terminal according to the present invention.

Meanwhile, when the main body is moved in a state that the touch screen 151 is in an inactive state, the mobile terminal 100 according to the present invention converts the touch screen 151 into an active state and outputs the preset screen information to the activated touch screen 151.

Here, "the inactive state of the touch screen 151" means that the lighting which illuminates the touch screen 151 is turned off. That is, when the touch screen 151 is in an active state, any information or graphic image is not displayed on the touch screen 151.

That is, when the touch screen 151 is in an inactive state, the controller 180 controls the sensing unit 140 to sense a movement of the main body of the mobile terminal, and when a movement is sensed, may output screen information or convert the touch screen 151 into an active state.

Referring to FIG. 15, when the touch screen 151 is converted into an active state in a lock mode, the controller 180 controls the touch screen 151 to output a lock screen 1510. Here, the lock mode is a state that part of a touch input applied to the touch screen 151 is restricted. That is, the controller 181 ignores a touch input which is applied to the touch screen 151 in the lock mode, and the touch screen 151 receives only a touch input which is applied to release the lock mode. In order to release the lock mode, a user has to apply a touch input to one region which is preset on the touch screen 151, or apply a touch input of the preset type to the touch screen 151.

The lock screen 1510 includes time information. The lock screen includes an index, the hour hand and the minute hand, and at least one of the hour hand and the minute hand is moved as time passes.

Meanwhile, at least one of the hour hand and the minute hand may be moved by a touch in the lock state, and the controller 180 may convert the lock state into a release state based on the movement of the at least one. More specifically, a specific time may be set as a password to convert the lock mode into the release mode. When the touch screen 151 is activated in the lock state, a lock screen including the hour hand and the minute hand is displayed, and at least one of the hour hand and the minute hand may be moved by a touch. When the at least one of the hour hand and the minute hand is moved to indicate the specific time by a touch, the controller 180 converts the lock state into the release state, and displays the preset screen information.

For instance, as shown in FIG. 15, the lock screen 1510 including the hour hand and the minute hand may be displayed on the touch screen 151 in a lock state, and the hour hand and the minute hand may indicate the current time of "10:10". Further, an image 1520 which indicates the execution of the lock mode may be further included in the lock screen 1510, and this may be variously modified according to the embodiments.

Thereafter, when a first touch is applied to the hour hand located at a position indicating 10:00 and the hour hand is moved to a position corresponding to 09:00, the hour hand indicates 09:00. When a second touch is applied to the minute hand located at a position indicating 10 minutes and the minute hand is moved to a position corresponding to 30 minutes within a reference time from the time that the first touch is released, the minute hand indicates 30 minutes.

When a new touch is not applied within a reference time in a state that at least one of the hour hand and the minute hand is moved by a touch, the controller 180 compares the time that is indicated by the hour hand and the minute hand with the time set by a password. When both the times are identical to each other, the controller 180 converts the lock state into a release state, and displays the preset screen information on the touch screen 151. On the other hand, when they are not identical, the controller 180 maintains the lock state and converts the hour hand and the minute hand to indicate the current time.

For instance, when the time set by a password is "09:30", as shown in the fourth drawing of FIG. 15, the controller 180 converts the lock state into a release state and displays a home screen page 1530 on the touch screen 151. The home screen page may include at least one object, and the object may be an icon of an application or a widget which is installed to a mobile terminal. However, the home screen page outputted to the touch screen 151 is just an example, but a graphic user interface of an application which has most recently been executed may be outputted to the touch screen151.

For another instance, when the time set as a password is not "09:30", the controller 180 moves the hour hand and the minute hand indicating "09:30" to the current time of "10:10".

The time set as a password may be reset by a user or may be changed to another time.

As described above in detail, the mobile terminal according to the present invention can display a lock screen including the hour hand and the minute hand in a lock state, and move the position of the at least one based on a touch applied to at least one of the hour hand and the minute hand. When the moved hour hand and the minute hand indicate the time set by a password, the lock state is converted into the release state, and the preset screen information is displayed. Thus, a user can release a lock state of a mobile terminal in a simple manner.

It is understood by those skilled in the art that the present features can be embodied in several forms without departing from the characteristics thereof. Therefore, it should also be understood that the above-described embodiments are not limited by any of the details of the foregoing description, unless otherwise specified, but rather should be construed broadly within its scope as defined in the appended claims, and therefore all changes and modifications that fall within the metes and bounds of the claims, or equivalents of such metes and bounds are therefore intended to be embraced by the appended claims.

## Claims

1. A mobile terminal comprising:
a main body;
a band connected to the main body and formed to be wearable to a user's wrist;
a touch screen disposed at a front of the main body and formed to sense a touch, and configured to display an hour hand and a minute hand indicating the current time; and
a controller configured to, when a touch applied to any one of the hour hand and the minute hand is moved to any point on the touch screen, move the any one to the any point and execute a preset function based on the moved any position.

2. The mobile terminal of claim 1, wherein the controller is configured to, when the touch is released from the any point, calculate the time corresponding to the moved any one position and the remaining another position, and execute the preset function based on the calculated time.

3. The mobile terminal of claim 2, wherein the calculated time is calculated differently according to a moving direction of the touch applied to any one.

4. The mobile terminal of claim 3, wherein the controller is configured to set a time range including the current time and the calculated time when the touch is released at any point, search information satisfying the preset condition based on the set time range, and display the searched information on the touch screen.

5. The mobile terminal of claim 4, wherein the controller is configured to display any one information searched at every unit hour on the touch screen when the searched information is plural.

6. The mobile terminal of claim 3, wherein the controller is configured to perform a preset first function when the calculated time is earlier than the current time, and perform a second function different from the first function when the calculated time is later than the current time.

7. The mobile terminal of claim 6, wherein the first function is configured to display information related to an event generated from at least one application earlier than the current time on the touch screen.

8. The mobile terminal of claim 7, wherein the second function is configured to display information related to a notification which is set to be outputted later than the current time on the touch screen.

9. The mobile terminal of claim 3, wherein the preset function is configured to set a time range including the current time and the calculated time, and display the set time range on the touch screen.

10. The mobile terminal of claim 2, wherein the preset function is configured to set an alarm with respect to the calculated time.

11. The mobile terminal of claim 10, wherein the controller is configured to control the touch screen to display the hour hand and the minute hand which indicate the current time and a sub-hour hand and a sub-minute hand which indicate the calculated time when the alarm is set with respect to the calculated time.

12. The mobile terminal of claim 11, wherein indication of the sub-hour hand and the sub-minute hand is terminated when the current time reaches the calculated time.

13. The mobile terminal of claim 1, further comprising an output unit configured to output an alarm in at least one method of a tactile method or an aural method when the current time is identical to the preset alarm time, and
wherein the controller is configured to, when the touch applied to any one is moved to any point on the touch screen while the alarm is being outputted, move the any one to the any point, and control the output unit to terminate outputting of the alarm.

14. The mobile terminal of claim 13, wherein the controller is configured to perform the preset function when the touch applied to any one is released, and
wherein the preset function is configured to set a new alarm such that an alarm is outputted at the time corresponding to the moved any one position and the remaining one position.

15. The mobile terminal of claim 1, wherein the controller is configured to perform the first function when the moved any one is the hour hand, and perform the second function different from the first function when the moved any one is the minute hand.

16. The mobile terminal of claim 1, further comprising a controller configured to calculate the time corresponding to a position of the moved any one and remaining one, and perform a different function according to the comparison result between the calculated time and the current time.

17. A method for controlling the mobile terminal, comprising:
displaying a hour hand and a minute hand which indicate the current time on a touch screen; and
when a touch applied to any one of the hour hand and the minute hand is moved to any point on the touch screen, moving the any one to any point and executing a preset function based on the moved any one position.

18. The method of claim 17, wherein the performing the preset function including:
calculating the time corresponding to the moved one position and the remaining position; and
executing a preset first function when the calculated time is earlier than the current time, and calculating a second function different from the first function when the calculated time is later than the current time.

19. The method of claim 17, further comprising:
outputting an alarm in at least one method of a tactile method or an aural method when the current time is identical to the preset alarm time; and
terminating outputting the alarm when a touch applied to any one is moved to any point on the touch screen while the alarm is outputted.

20. The method of claim 19, wherein the preset function is configured to set a new alarm such that an alarm is outputted at the time corresponding to the moved any one position and the remaining one position.
